# EUROPEAN PATENT APPLICATION

(11) **EP 4 844 822 A1**
(43) Date of publication of application: **25.11.2026**
(21) Application number: 24955946.9
(22) Date of filing: 07.11.2024
(51) Int. Cl.: H01M 4/133, H01M 4/136, H01M 4/36, H01M 4/583, H01M 4/58, H01M 10/0525, H01M 10/0587, H01M 10/0585, H01M 10/44, H01M 10/42, H02J 7/00

(54) **LITHIUM-ION BATTERY, CHARGING METHOD, AND LITHIUM-ION BATTERY SYSTEM**

(30) Priority: 26.09.2024 CN 202411346279
(71) Applicant: Contemporary Amperex Technology Co., Limited, Ningde, Fujian 352100 (CN)
(72) Inventor: XUE, Junpeng, Ningde, Fujian 352100 (CN); ZHANG, Xiaofeng, Ningde, Fujian 352100 (CN); WEI, Xichen, Ningde, Fujian 352100 (CN); ZHAO, Yuzhen, Ningde, Fujian 352100 (CN)
(74) Representative: Lorenz Seidler Gossel Part. mbB
(86) International application number: PCT/CN2024/130542
(87) International publication number: WO 2026/065672

(57) **Abstract**

A lithium-ion battery, a charging method, and a lithium-ion battery system. The lithium-ion battery comprises a housing (40), a battery cell (30), and an electrolyte. The battery cell (30) comprises a positive electrode sheet (10), a negative electrode sheet (20), and a separator; a negative electrode active material comprises graphite; a positive electrode active material comprises a lithium-containing phosphate and a carbon layer located on the surface of the lithium-containing phosphate; the thickness of a single-sided active material layer of the negative electrode sheet is 50-95 µm, the thickness of a single-sided active material layer of the positive electrode sheet is 60-105 µm, the Dv50 of the negative electrode active material is 10-30 µm, and the graphitization degree of the negative electrode active material is greater than or equal to 90%; and the capacity L of the lithium-ion battery is greater than or equal to 200 Ah, and the actual gas storage space of the lithium-ion battery is greater than or equal to 48 cm³. Under normal use conditions, an explosion-proof valve (43) of the lithium-ion battery will not be forced open, and the lithium-ion battery has the ability to withstand abnormal high temperatures, thereby reducing the risk of battery scrap caused by the forced opening of the explosion-proof valve (43).

## Description

The present application claims priority to Chinese Patent Application 202411346279.9, filed with the China National Intellectual Property Administration on September 26, 2024 and entitled "LITHIUM-ION BATTERY, CHARGING METHOD, AND LITHIUM-ION BATTERY SYSTEM", which is incorporated herein by reference in its entirety.

### TECHNICAL FIELD

The present application relates to the technical field of lithium batteries, and particularly relates to a lithium-ion battery, a charging method, and a lithium-ion battery system.

### BACKGROUND

In recent years, with the wide application range of batteries, the batteries are widely used in energy storage power systems such as hydropower, thermal power, wind power and solar power stations, as well as the fields of power tools, electric bicycles, electric motorcycles, electric vehicles, military equipment, aerospace and other fields. In the application of lithium batteries, battery capacity is increasing and electrode plates in the batteries are getting thicker, so batteries with higher capacity and thicker electrode plates are needed. However, as battery capacity increases, especially the electrode plates are getting thicker, the problem of gas production inside the batteries becomes more severe than before, the phenomenon of battery explosion-proof valves being forced open is increasing, and once the explosion-proof valve is forced open, the battery can no longer be used. It is expected that the battery explosion-proof valves are forced open under abnormal use or extreme conditions, not during normal use.

How to further improve the battery capacity and rate performance, while reducing the risk of battery failure caused by unreasonable forced opening of the safety valve, has become an urgent problem that needs to be solved.

### Technical problems

One objective of the embodiments of the present application is to provide a lithium-ion battery, a charging method, and a lithium-ion battery system.

### Technical solutions

In order to achieve the above purpose, the present application provides the lithium-ion battery, which includes a case, a cell, and an electrolyte solution; the cell and the electrolyte solution are arranged in the case; the cell includes a positive electrode plate, a negative electrode plate, and a separator; the separator is arranged between the positive electrode plate and the negative electrode plate; the positive electrode plate includes a positive electrode current collector and a positive electrode active material layer; the positive electrode active material layer is electrically connected to the positive electrode current collector; the negative electrode plate includes a negative electrode current collector and a negative electrode active material layer; the negative electrode active material layer is electrically connected to the negative electrode current collector;
at least one surface of the negative electrode current collector is provided with the negative electrode active material layer, and a thickness of the active material layer on one surface of the negative electrode plate is 50-95 µm; the negative electrode active material layer comprises a negative electrode active material, and the negative electrode active material comprises graphite; Dv50 of the graphite is 10-30 µm, and a graphitization degree of the graphite is greater than or equal to 90%;
at least one surface of the positive electrode current collector is provided with the positive electrode active material layer, and the thickness of the active material layer on one surface of the positive electrode plate is 60-105 µm; the positive electrode active material layer comprises a positive electrode active material, and the positive electrode active material comprises lithium-containing phosphate and a carbon layer located on a surface of the lithium-containing phosphate; and
a capacity L of the lithium-ion battery is ≥ 200Ah, and an actual gas storage space v of the lithium-ion battery is ≥ 48cm³.

The present application further provides batteries with different capacities, specifically,
the capacity L of the lithium-ion battery is 200Ah≤ L≤300Ah, and the theoretical gas storage space of the lithium-ion battery is V0, and V0=0.24cm³/Ah·L; or,
the capacity L of the lithium-ion battery is 300Ah<L≤400Ah, and the theoretical gas storage space of the lithium-ion battery is V0, and V0=0.29cm³/Ah·L; or,
the capacity L of the lithium-ion battery is 400Ah<L≤500Ah, and the theoretical gas storage space of the lithium-ion battery is V0, and V0=0.33cm³/Ah·L; or,
the capacity L of the lithium-ion battery is 500Ah<L≤600Ah, and the theoretical gas storage space of the lithium-ion battery is V0, and V0=0.38cm³/Ah·L; or,
the capacity L of the lithium-ion battery is 600Ah<L≤700Ah, and the theoretical gas storage space of the lithium-ion battery is V0, and V0=0.44cm³/Ah·L; or,
the capacity L of the lithium-ion battery is 700Ah<L≤800Ah, and the theoretical gas storage space of the lithium-ion battery is V0, and V0=0.51cm³/Ah·L; or,
the capacity L of the lithium-ion battery is 800Ah<L≤900Ah, and the theoretical gas storage space of the lithium-ion battery is V0, and V0=0.59cm³/Ah·L; or,
the capacity L of the lithium-ion battery is 900Ah<L≤1000Ah, and the theoretical gas storage space of the lithium-ion battery is V0, and V0=0.68cm³/Ah·L; or,
the capacity L of the lithium-ion battery is 1000Ah<L≤1100Ah, and the theoretical gas storage space of the lithium-ion battery is V0, and V0=0.79cm³/Ah·L; and
the actual gas storage space v of the lithium-ion battery is greater than or equal to the theoretical gas storage space V0.

Further, preferably,
the capacity L of the lithium-ion battery is 200Ah≤ L≤300Ah, and the theoretical gas storage space of the lithium-ion battery is V0, and V0=0.34cm³/Ah·L; or,
the capacity L of the lithium-ion battery is 300Ah<L≤400Ah, and the theoretical gas storage space of the lithium-ion battery is V0, and V0=0.4cm³/Ah·L; or,
the capacity L of the lithium-ion battery is 400Ah<L≤500Ah, and the theoretical gas storage space of the lithium-ion battery is V0, and V0=0.47cm³/Ah·L; or,
the capacity L of the lithium-ion battery is 500Ah<L≤600Ah, and the theoretical gas storage space of the lithium-ion battery is V0, and V0=0.54cm³/Ah·L; or,
the capacity L of the lithium-ion battery is 600Ah<L≤700Ah, and the theoretical gas storage space of the lithium-ion battery is V0, and V0=0.65cm³/Ah·L; or,
the capacity L of the lithium-ion battery is 700Ah<L≤800Ah, and the theoretical gas storage space of the lithium-ion battery is V0, and V0=0.71cm³/Ah·L; or,
the capacity L of the lithium-ion battery is 800Ah<L≤900Ah, and the theoretical gas storage space of the lithium-ion battery is V0, and V0=0.78cm³/Ah·L; or,
the capacity L of the lithium-ion battery is 900Ah<L≤1000Ah, and the theoretical gas storage space of the lithium-ion battery is V0, and V0=0.87cm³/Ah·L; or,
the capacity L of the lithium-ion battery is 1000Ah<L≤1100Ah, and the theoretical gas storage space of the lithium-ion battery is V0, and V0=0.98cm³/Ah·L; and
the actual gas storage space v of the lithium-ion battery is greater than or equal to the theoretical gas storage space V0.

In case of improving an energy intensity, it is further defined as follows:
the capacity L of the lithium-ion battery is 200Ah≤L≤300Ah, and the theoretical gas storage space of the lithium-ion battery is V0max, and V0max=0.34cm³/Ah·L; or,
the capacity L of the lithium-ion battery is 300Ah<L≤400Ah, and the theoretical gas storage space of the lithium-ion battery is V0max, and V0max=0.4cm³/Ah·L; or,
the capacity L of the lithium-ion battery is 400Ah<L≤500Ah, and the theoretical gas storage space of the lithium-ion battery is V0max, and V0max=0.47cm³/Ah·L; or,
the capacity L of the lithium-ion battery is 500Ah<L≤600Ah, and the theoretical gas storage space of the lithium-ion battery is V0max, and V0max=0.54cm³/Ah·L; or,
the capacity L of the lithium-ion battery is 600Ah<L≤700Ah, and the theoretical gas storage space of the lithium-ion battery is V0max, and V0max=0.65cm³/Ah·L; or,
the capacity L of the lithium-ion battery is 700Ah<L≤800Ah, and the theoretical gas storage space of the lithium-ion battery is V0max, and V0max=0.71cm³/Ah·L; or,
the capacity L of the lithium-ion battery is 800Ah<L≤900Ah, and the theoretical gas storage space of the lithium-ion battery is V0max, and V0max=0.78cm³/Ah·L; or,
the capacity L of the lithium-ion battery is 900Ah<L≤1000Ah, and the theoretical gas storage space of the lithium-ion battery is V0max, and V0max=0.87cm³/Ah·L; or,
the capacity L of the lithium-ion battery is 1000Ah<L≤1100Ah, and the theoretical gas storage space of the lithium-ion battery is V0max, and V0max=0.98cm³/Ah·L.

The actual gas storage space v of the lithium-ion battery is greater than or equal to the theoretical gas storage spaces V0max.

In some embodiments, at least part of the surface of graphite is coated with a carbon layer, the Dv90 of the graphite is ≤40µm, the Dv10 of the graphite is ≥3µm, and the Dv99 of the graphite is ≤49µm.

In some embodiments, an OI value of the graphite is 3-30, preferably 10-30, and more preferably 15-30.

In some embodiments, the graphitization degree of the graphite is 90%-95%, preferably 91%-95%.

In some embodiments, a surface density of the active material layer on one surface of the negative electrode plate is 0.07mg/mm²-0.13mg/mm².

In some embodiments, a compacted density of the active material layer on one surface of the negative electrode plate is 1.3g/cc-1.7g/cc.

In some embodiments, a surface density of the active material layer on one surface of the positive electrode plate is 0.16mg/mm²-0.26mg/mm².

In some embodiments, a compacted density of the active material layer on one surface of the positive electrode plate is 2.3g/cc-2.7g/cc.

In some embodiments, the separator includes a base film and a coating, the coating is adhered to a surface of the base film and partially located in the base film, and a porosity of the separator is 30%-50%.

In some embodiments, a thickness of the carbon layer on the surface of the graphite is 0.5-2 µm.

In some embodiments, the negative electrode active material layer further includes carbon nanotubes, and the carbon nanotubes include at least one of few-walled carbon nanotubes and single-walled carbon nanotubes.

In some embodiments, the negative electrode active material layer further includes silicon, and if the capacity L of the lithium ion battery is shown as 200Ah≤L≤500Ah, a mass content of the silicon in the negative electrode active material layer is 1%-10%.

In some embodiments, in a thickness direction of the negative electrode active material layer, the silicon is distributed on a side of the negative electrode active material layer close to the negative electrode current collector.

In some embodiments, the lithium-containing phosphate includes lithium iron phosphate that is doped with a metal element, and the metal element is selected from at least one of titanium and vanadium.

In some embodiments, the doped metal element accounts for not greater than 0.4% of the mass of the positive electrode active material.

In some embodiments, the doped metal elements include titanium, and the titanium accounts for 0.2%-0.4% of the mass of the positive electrode active material.

In some embodiments, the doped metal elements include titanium and vanadium, the titanium accounts for 0.1%-0.2% of the mass of the positive electrode active material, and the vanadium accounts for 0.01%-0.05% of the mass of the positive electrode active material.

In some embodiments, the positive electrode active material layer includes carbon nanotubes, and the carbon nanotubes include at least one of few-walled carbon nanotubes and single-walled carbon nanotubes.

In some embodiments, the electrolyte solution includes a lithium salt and a solvent, a molar content by volume of the lithium salt is 0.8mol/L-1.5mol/L, and the lithium salt includes lithium hexafluorophosphate.

In some embodiments, the lithium salt also includes lithium bis(fluorosulfonyl)imide.

In some embodiments, the molar content by volume of lithium hexafluorophosphate is higher than that of lithium bis(fluorosulfonyl)imide.

In some embodiments, the capacity L of the lithium-ion battery is 200Ah≤L≤300Ah, the lithium bis(fluorosulfonyl)imide accounts for 0.1%-9% of the mass of the electrolyte solution.

In some embodiments, the lithium bis(fluorosulfonyl)imide accounts for 0.1%-5% of the mass of the electrolyte solution.

In some embodiments, the capacity L of the lithium-ion battery is 300Ah<L≤500Ah, the lithium bis(fluorosulfonyl)imide accounts for 1%-9% of the mass of the electrolyte solution.

In some embodiments, the lithium bis(fluorosulfonyl)imide accounts for 1%-5% of the mass of the electrolyte solution.

In some embodiments, the solvent includes EC, DMC, EMC, and DEC; the content of EC is 30%-40%, and a sum of the mass of DMC and the mass of EMC is greater than the mass of EC; and the content of EC is a quotient of the mass of EC/ (difference value between the mass of the electrolyte solution and the mass of the lithium salt).

In some embodiments, the total content of EMC and DMC is 50%-60%; and the total content of EMC and DMC is the quotient of the total mass of EMC and DMC/ (difference value between the mass of the electrolyte solution and the mass of the lithium salt).

In some embodiments, the content of DMC is 10%-15%; and the content of DMC is the quotient of the mass of the DMC/(difference value between the mass of the electrolyte solution and the mass of the lithium salt).

In some embodiments, the electrolyte solution also includes carboxylic ester with the content not greater than 10%; and the content of the carboxylic ester is the quotient of the mass of the carboxylic ester/ (difference value between the mass of the electrolyte solution and the mass of the lithium salt).

In some embodiments, the negative electrode plate is of a square structure, a width of the negative electrode plate is 100mm-150mm, and the porosity of the separator is 30%-50%; and preferably, a length-width ratio of the cell is 6-8.

In some embodiments, the negative electrode plate is of a square structure, a width of the negative electrode plate is 200mm-250mm, and the porosity of the separator is 35%-50%; and preferably, a length-width ratio of the cell is 2.8-4.

In some embodiments, the negative electrode plate includes negative electrode tabs which are electrically connected to the negative electrode current collector; the positive electrode plate includes positive electrode tabs which are electrically connected to the positive electrode current collector;
the case includes a positive electrode terminal post, a negative electrode terminal post, and an explosion-proof valve; the positive electrode terminal post is electrically connected to the positive electrode tabs; the negative electrode terminal post is electrically connected to the negative electrode tab; the explosion-proof valve is arranged at a first end of the case; at least one of the positive electrode terminal post and the negative electrode terminal post is also arranged at the first end of the case; a gas pressure for opening the explosion-proof valve is 0.55-0.65 Mpa; and a ratio of an area of the explosion-proof valve to the capacity of the lithium-ion battery is 0.5mm²/Ah-1.5mm²/Ah.

In some embodiments, the positive electrode terminal post is arranged at the first end of the case; the positive electrode tabs are arranged on a short edge of the positive electrode current collector; a first upper exhaust channel is formed between upper ends of the positive electrode tabs and the case; and in an airflow direction of the first upper exhaust channel, a projection region of the explosion-proof valve is at least partially overlapped with the projection region of the first upper exhaust channel.

In some embodiments, in the airflow direction of the first upper exhaust channel, an overlap ratio of the projection region of the explosion-proof valve and the projection region of the first upper exhaust channel exceeds 80%; the overlap ratio of the projection region of the explosion-proof valve and the projection region of the first upper exhaust channel is a ratio of an area of the overlapping region of the projection region of the explosion-proof valve and the projection region of the first upper exhaust channel to an area of the projection region of the first upper exhaust channel.

In some embodiments, the positive electrode tabs are asymmetrically distributed on the short edge of the positive electrode current collector.

In some embodiments, in a width direction of the cell, a vertical distance from upper ends of the positive electrode tabs to an upper end of the positive electrode plate is a first distance, the vertical distance from lower ends of the positive electrode tabs to a lower end of the positive electrode plate is a second distance, and the first distance is greater than the second distance.

In some embodiments, the negative electrode terminal post is arranged at a first end of the case, the negative electrode tabs are arranged on the short edge of the negative electrode current collector, a second upper exhaust channel is formed between upper ends of the negative electrode tabs and the case; and in the airflow direction of the second upper exhaust channel, the projection region of the explosion-proof valve and the projection region of the second upper exhaust channel are at least partially overlapped.

In some embodiments, in the airflow direction of the second upper exhaust channel, the overlap ratio of the projection region of the explosion-proof valve and the projection region of the second upper exhaust channel exceeds 80%; and the overlap ratio of the projection region of the explosion-proof valve and the projection region of the second upper exhaust channel is the ratio of the area of the overlapping region of the projection region of the explosion-proof valve and the projection region of the second upper exhaust channel to the area of the projection region of the second upper exhaust channel.

In some embodiments, the ratio of widths of the negative electrode tabs to a width of the short edge of the negative electrode current collector is 0.5-0.8.

In some embodiments, the ratio of widths of the negative electrode tabs to a width of the short edge of the negative electrode current collector is 0.6-0.8.

In some embodiments, the negative electrode tabs are asymmetrically distributed on the short edge of the negative electrode current collector.

In some embodiments, in the width direction of the cell, the vertical distance from the upper ends of the negative electrode tabs to the upper end of the negative electrode plate is a third distance, the vertical distance from the lower ends of the negative electrode tabs to the lower end of the negative electrode plate is a fourth distance, and the third distance is greater than the fourth distance.

In some embodiments, a difference value of Dv50 and Dv10 of graphite is ≤10µm, and the difference value of Dv90 and Dv50 of graphite is ≤15µm.

In some embodiments, the positive electrode current collector is prepared from aluminum foil, a thickness of the active material layer on one surface of the positive electrode plate is ≤95µm, the thickness of the positive electrode current collector is D1, and D1 is 11µm-13.5µm.

In some embodiments, the thickness of the active material layer on one surface of the positive electrode plate is >95µm, the thickness of the positive electrode current collector is D2, and D2 is 13.5-16 µm.

In some embodiments, the negative electrode active material layer further includes silicon; the thickness of the active material layer on one surface of the negative electrode plate is 50-70µm, and a mass content of silicon in the negative electrode active material layer is 1%-10%.

In some embodiments, the negative electrode active material layer further includes silicon; the thickness of the active material layer on one surface of the negative electrode plate is 70-80µm, and a mass content of silicon in the negative electrode active material layer is 1%-8%.

In some embodiments, the negative electrode active material layer further includes silicon; the thickness of the active material layer on one surface of the negative electrode plate is 80-95µm, and a mass content of silicon in the negative electrode active material layer is 1%-5%.

In some embodiments, the capacity L of the lithium-ion battery is 200Ah≤L≤300Ah, the content of the carboxylic ester is 5%-10%, and the lithium bis(fluorosulfonyl)imide accounts for 0.1%-5% of the mass of the electrolyte solution.

In some embodiments, the capacity L of the lithium-ion battery is 300Ah<L≤500Ah, the content of the carboxylic ester is 5%-10%, and the lithium bis(fluorosulfonyl)imide accounts for 1%-5% of the mass of the electrolyte solution.

In some embodiments, the negative electrode active material includes primary particles consisting of graphite and a carbon layer on a surface of the graphite, and the Dv50 of the primary particles is 10-20 µm.

In some embodiments, the negative electrode active material includes secondary particles, the secondary particles include aggregates of the primary particles, and the Dv50 of the secondary particles is 10-30 µm.

In some embodiments, surfaces of the aggregates include the carbon layer.

The present application further discloses a charging method for charging the lithium-ion battery; the charging method includes a first charging section and a second charging section, in which, a voltage in the first charging section is less than that in the second charging section, the voltage of the first charging section increases as the charging time increases, and the voltage of the second charging section is unchanged; the first charging section includes the following charging processes:
charging the lithium-ion battery with a first current within a first time;
charging the lithium-ion battery with a second current within a second time;
charging the lithium-ion battery with a third current within a third time; and
charging the lithium-ion battery with a fourth current within a fourth time;
the first current is greater than the second current, the first time is greater than the second time, the third current is not greater than the first current, the third time is greater than the second time, the fourth current is less than the third current, and the fourth time is less than the third current.

The second current is equal to the fourth current.

The present application further provides a lithium-ion battery system; the system includes a management module and a lithium-ion battery, the management module includes a charging program for the lithium-ion battery, and the charging program implements the charging method.

### BRIEF DESCRIPTION OF THE DRAWINGS

FIG. 1 is a schematic structural diagram of a positive electrode plate according to the present application.
FIG. 2 is a schematic structural diagram of a negative electrode plate according to the present application.
FIG. 3 is a schematic structural diagram of a lithium-ion battery according to the present application.
FIG. 4 is a schematic diagram of a gas production process of a lithium-ion battery according to the present application.
FIG. 5 is a schematic structural diagram of a negative electrode plate according to the present application.
FIG. 6 is a schematic structural diagram of a positive electrode plate according to the present application.
FIG. 7 is a schematic structural diagram of a positive electrode plate according to the present application.
FIG. 8 is a schematic structural diagram of a negative electrode plate according to the present application.
FIG. 9 is a schematic structural diagram of a lithium-ion battery according to the present application.
FIG. 10 is a schematic diagram of a gas production process of a lithium-ion battery according to the present application.

### Reference numerals:

10, positive electrode plate; 11, positive electrode tab; 20, negative electrode plate; 21, negative electrode tab; 30, cell; 40, case; 41, positive electrode terminal post; 42, negative electrode terminal post; 43, explosion-proof valve; 50, airflow direction indication arrow; 51, first upper exhaust channel; h1, first distance; h2, second distance; h3, third distance; h4, fourth distance; Ld, length direction; and Hd, height direction.

### DESCRIPTION OF THE PRESENT INVENTION

The embodiments of a lithium-ion battery, a charging method, and a lithium-ion battery system in the present application are described in detail below with reference to the accompanying drawings. However, unnecessary detailed explanations may be omitted. For example, detailed description of a well-known matter, and a duplicate description of the actual same structure are omitted. This is to prevent the following description from becoming unnecessarily lengthy and to facilitate the understanding of those skilled in the art. In addition, the accompanying drawings and subsequent descriptions are provided for those skilled in the art to fully understand the present application, and are not intended to limit the subject matter recited in the claims.

In the present application, the "range" is defined in a form of a lower limit and an upper limit, and a given range is defined by selecting a lower limit and an upper limit, which define the boundaries of a particular range. The range defined by such way can be with or without end values, and can be arbitrarily combined, i.e., any lower limit can be combined with any upper limit to form a range. For example, if ranges of 60-120 and 80-110 are listed for a particular parameter, it is to be understood that the ranges of 60-110 and 80-120 are also expected. In addition, if the minimum range values 1 and 2 are listed, and if the maximum range values 3, 4 and 5 are listed, the following ranges can be all expected: 1-3, 1-4, 1-5, 2-3, 2-4 and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed in this article, and "0-5" is just an abbreviated representation of these combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, the terms "comprise", "comprising", "include" and "including" mentioned in the present application may be open-ended or closed-ended. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, condition "A or B" is met by either of the following: A is true (or exists) and B is false (or does not exist); A is false (or non-existent) and B is true (or exists); or both A and B are true (or exist).

The lithium-ion battery in the present application includes a case, a cell, and an electrolyte solution; the cell and the electrolyte solution are arranged in the case, and the case is sealed; the cell includes a positive electrode plate, a negative electrode plate, and a separator shown as follows:
negative electrode plate:
the negative electrode plate includes a negative electrode current collector and a negative electrode active material layer; the negative electrode active material layer is arranged on at least one surface of the negative electrode current collector; and the negative electrode active material layer is electrically connected to the negative electrode current collector.

The negative electrode active material layer includes a negative electrode active material which includes graphite, and the graphite can be natural graphite or artificial graphite, preferably artificial graphite.

The graphite with different particle sizes has different specific surface areas and gas production rates. For graphite with less particle size, lithium ions more easily intercalate and de-intercalate between graphite layers. However, the less the graphite particle size, the greater its specific surface area, which leads to an increase in SEI generation amount, thereby increasing gas production rate; the increase in SEI amount results in low initial efficiency of the lithium-ion battery, and as the lithium-ion battery is subjected to charge-discharge cycles, the SEI is continuously consumed and regenerated, leading to the increase in gas production rate over the entire lifecycle. Meanwhile, the particle size of the graphite cannot be excessively large; if the graphite particle size is excessively large, the lithium ions cannot enter the graphite layers in time, leading to lithium dendrite on the surface of large particles, which can react with an electrolyte solution to produce gas, the problem of lithium dendrites and gas production becomes more serious under high rates (charging rates of 1C or above). For a high-capacity thick-electrode-plate cell in the present application [the high-capacity thick-electrode-plate cell in the present application refers to that the capacity of the lithium-ion battery is not less than 200 Ah, and the compacted density of a negative electrode active material layer on one surface is 1.3-1.7g/cc (the compacted density is measured when the charge-discharge cycles of the lithium-ion battery is less than or equal to 100 times. During the preparation of the lithium-ion battery, electrode plates are usually rolled to increase the compacted density, but the compacted density often rebounds and decreases in the early cycles of the finished lithium-ion battery, therefore, to more accurately reflect the compacted density of finished lithium-ion battery, the applicant selected the compacted density of the negative electrode active material layer on one surface of the negative electrode plate in the lithium-ion battery with fewer charge-discharge cycles), and the surface density of the negative electrode active material layer on one surface is 0.07mg/mm²-0.13mg/mm² (the surface density is measured when the charge-discharge cycles of the lithium-ion battery is less than or equal to 100 times)], the particle size of the graphite calculated by Dv50 is selected to be 10-30µm.

Moreover, according to further design of the applicant further, too much graphite with large particle size cannot be formed in the negative electrode plate because in the negative electrode plate, after the particle size of the graphite is greater than 50 µm, the lithium ions gathered at the position corresponding to the graphite with large particle size cannot completely enter graphite layers in time, consequently, with some deposited on the surface of the graphite to form lithium dendrites, which may puncture an SEI film, resulting in further consumption of the electrolyte solution to form SEI and produce gas; and as the lithium dendrites continue to grow, in addition to causing increase in the local temperature at this position, even the lithium dendrites will pierce a separator, leading to internal short circuits in the lithium-ion battery to cause intense gas production or even explosions; furthermore, the lithium dendrite problem caused by the graphite with large particle size is more serious at this position, in contact with the edge of the positive electrode plate, on the negative electrode plate; the more concentrated the graphite with large particle size, the easier the lithium dendrites are formed at the concentrated position, so it is needed to remove the graphite with large particle size as much as possible during preparing the negative electrode plate, and the quantity of the graphite with large particle size is ensured to be in a controllable range, specifically, the Dv90 of the graphite can be controlled to be not greater than 40 µm, and the Dv99 of the graphite is further controlled to be not greater than 49 µm.

On the other hand, in the high-capacity thick-electrode-plate cell in the present application, in addition to controlling the particle size range of the graphite to be not less than Dv50, it is also needed to control too much graphite with small particle size appearing in the electrode plate, thus the continuous gas production caused by the specific surface area of the graphite with small particle size is reduced, and specifically, the Dv10 can be controlled to be not less than 3 µm.

In addition, the inventor also creatively designed that the difference value between Dv50 and Dv10 of graphite is ≤10µm, and the difference value between Dv90 and Dv50 of the graphite is ≤15µm; due to the two difference values, the particle size distribution of the graphite is more concentrated, so that the current density at each part in the negative electrode plate is more uniform; the more uniform the current density distribution in the negative electrode plate is, the less the possibility of generating lithium dendrites is; and the damage on the SEI on the surface of the graphite is reduced, and thus the gas production rate is further reduced. On the other hand, in order to improve the compacted density of the negative electrode plate, the compacted density is generally improved by a large and small particle mixing mode during the preparation, so that the volume capacity of the cell is further improved. In the cell with high volume capacity requirements, the design that the difference value between the Dv50 and the Dv10 is ≤10µm, and the difference value between the Dv90 and the Dv50 is ≤15µm may not be adopted.

The graphite is of a layered structure, so the lithium ions in the electrolyte solution are more easily intercalated into the graphite from the graphite layer to realize lithium intercalation during the cycle process of the lithium-ion battery, and the lithium cannot be intercalated in a direction vertical to the graphite layer; and the greater the OI value corresponding to the graphite (degree of orientation, C004/C110) is, the easier the lithium intercalation is. When the graphite is used as a negative electrode active material, the OI value of the graphite (or carbon-coated graphite) is 3-30 according to the design of the inventor; when the OI is less than 3, the lithium intercalation in the graphite is difficult to carry out, then the number of the lithium dendrites increases, and as a result, the gas production rate in the large-capacity cell over 200 Ah will be high; in addition, the lithium-ion battery over 200 Ah is generally used as an energy storage lithium-ion battery, which does not need large-rate charging and discharging (in some implementation modes or use scenarios, high-rate charging and discharging requirements may also be imposed on large-capacity energy storage lithium-ion batteries), and therefore, in terms of cost, the OI value does not need to be exceed 30, otherwise the cost performance will be low.

Graphite produced by different processes is different in graphitization degree, it is expected by the inventor to use the graphite with higher graphitization degree; if the graphite has higher graphitization degree, the graphite layers are more difficult to strip during the circulation process, the SEI is more stable, less gas is produced during long-cycle process, but the graphitization degree cannot be infinitely high due to the limitation of existing artificial graphite preparation process and cost performance; according to the design of the inventor, in the high-capacity thick-electrode-plate lithium-ion battery in the present application, the graphitization degree (also including carbon-coated graphite in the present application) is greater than or equal to 90%; furthermore, to meet the requirement of the high-capacity lithium-ion battery more than 400 Ah, the graphitization degree of the graphite is preferably 91%-95%. If the graphitization degree is less than 91%, the gas production rate of the high-capacity lithium-ion battery more than 400 Ah during the long-cycle process is relatively high, but when the graphitization degree exceeds 95%, the cost performance of the graphite with the graphitization degree more than 95% will not take the advantage according to the existing graphite price.

In order to further reduce gas production, the surface of graphite is coated with carbon in the present application. After the graphite is coated with amorphous carbon, as the amorphous carbon has a plurality of lithium-intercalated points, on one hand, the impact of the lithium ions on the graphite layers during rapid charging can be relieved, and the stripping problem of the graphite layers is reduced, so that the gas production can be better reduced; on the other hand, the carbon coating may reduce the capacity of the negative electrode plate, so the carbon coating amount cannot be too much; and moreover, the carbon coating amount cannot be too low, as too low is not conducive to forming a uniform carbon-coated layer; the carbon coating thickness of the graphite is controlled to be 0.5-2 µm in the present application; in order to verify the carbon coating thickness and the carbon coating uniformity, the cycled lithium-ion battery is discharged and disassembled in the present application, powder is scraped from the disassembled negative electrode plate and is sampled to measure TEM; 5 graphite particles are randomly selected from the field of view of the TEM, 5 points are uniformly selected from the peripheral surface of each graphite particle to measure the carbon coating thickness, and the obtained 25 measurement results are averaged to obtain the carbon coating thickness. As the carbon coating thickness is very small, the influence on the particle size of the graphite is very small, the influence of carbon coating on the particle size (such as Dv50) of the graphite is ignored in the present application, and meanwhile, the influence of carbon coating on the graphitization degree and the OI value is also ignored; in addition, in order to conveniently analyze the influence caused by the particle size of the graphite from the finished lithium-ion battery end, when testing and analyzing the finished lithium-ion battery, although the particle size range of the graphite will be influenced by factors such as a conductive agent in the negative electrode active material layer, the influence is also ignored due to the factors such as small content; and after such secondary factors are ignored, the particle size range of the graphite obtained by testing the finished lithium-ion battery is treated to be the same as the initial particle size range of the graphite, and the graphitization degree and the OI value of the graphite obtained by testing the finished lithium-ion battery are treated to be the same as the initial graphitization degree and OI value range of the graphite.

The graphite can be primary particles or primary particles coated with carbon, at the moment, the negative electrode active material includes the primary particles consisting of the graphite and the carbon layer on the surface of the graphite, and the Dv50 of the primary particles is 10-20 µm. The graphite can also be aggregates formed by aggregating the primary particles, namely secondary particles. The Dv50 of the secondary particles is 10-30 µm. However, due to the existence of the primary particles, the specific surface area of the aggregates is increased. In order to reduce gas production, the preferred structure of the secondary particles is as follows: the surfaces of the primary particles are coated with the carbon layer, and the primary particles coated with the carbon are aggregated to form the secondary particles; further preferably, the surfaces of the secondary particles formed by aggregation are coated with the carbon layer; and the components of the carbon layer on the surfaces of the primary particles can be different from or the same as the components of the carbon layer coated on the surfaces of the secondary particles. The present application further discloses a preparation process for such secondary particles coated with the carbon, which includes: dispersing the primary particles in a solution containing an organic carbon source monomer, performing hydrothermal polymerization reaction, forming a coating layer containing an organic carbon source polymer on the surfaces of the primary particles after the polymerization reaction, and then performing carbonization to obtain the primary particles coated with the carbon; and then dispersing the primary particles coated with the carbon in liquid containing an organic carbon source precursor, performing spray drying and then performing carbonization. The secondary particles coated with the carbon can further meet the gas production requirements of the high-capacity thick-electrode plate cell in the present application, especially for a high-capacity cell more than 400 Ah.

In addition to including the negative electrode active material (the negative electrode active material in the present application includes graphite, and the surface of the graphite can be coated with carbon), the negative electrode plate further includes a binder and the conductive agent. According to the technical solution of the present application, the compacted density of the negative electrode active material layer on one surface is 1.3-1.7g/cc (the compacted density is measured when the lithium-ion battery is charged and discharged less than or equal to 100 times; during the preparation of the lithium-ion battery, the electrode plates are usually rolled to increase the compacted density, but the compacted density often rebounds and decreases in the early cycles of the finished lithium-ion battery, therefore, to more accurately reflect the compacted density of the finished lithium-ion battery, the applicant selected the compacted density of the negative electrode active material layer on one surface of the negative electrode plate in the cell with fewer charge-discharge cycles, the surface density of the negative electrode active material layer on one surface is 0.07mg/mm²-0.13mg/mm² (the surface density is measured when the lithium-ion battery is charged and discharged less than or equal to 100 times); the thickness of the negative electrode active material layer on one surface is 50-95µm; the thickness of the negative electrode current collector is 5 µm; and when both surfaces of the corresponding negative electrode current collector are coated with the negative electrode active material layer, the thickness of the negative electrode plate is 105-195 µm (the thickness of the negative electrode active material layer and the thickness of the negative electrode plate are measured when the lithium-ion battery is charged and discharged less than 100 times); because the thickness of the negative electrode plate in the technical solution of the present application is large, in order to keep good electrical contact at each position in the negative electrode active material layer, the conductive agent in the negative electrode active material layer in the present application preferably includes carbon nanotubes, preferably, single-walled carbon nanotubes and/or few-walled carbon nanotubes; the length of the single-walled carbon nanotubes in the present application is 1-50 µm, the section of the single-walled carbon nanotubes is a graphene sheet, with the diameter of 0.75-10 nm, further preferably, 1-3 nm; and the section of the few-walled carbon nanotubes in the present application is 2-5 graphene sheets, with the diameter of 1-15nm, further preferably, 2-5 nm. Compared with other conventional conductive agents such as carbon black, on one hand, the single-walled carbon nanotubes or the few-walled carbon nanotubes have better conductivity; on the other hand, in a thick electrode plate, the electrode plate coating area is large, the graphite will expand and shrink during the cycle process, and particularly after silicon is doped in the graphite, the thickness difference between expansion and shrinkage will further increase, so it is difficult for the active material at an upper portion of the thick electrode plate to obtain electrons during the cycle process of the thick electrode plates, and even the thick electrode plate will be layered, which makes the active material at the upper layer more difficult to obtain the electrons; and the single-walled carbon nanotubes or the few-walled carbon nanotubes have a great length-diameter ratio relative to the carbon black, which realizes the effect of fixing the thick electrode plate, thereby improving the capability of the active material at the upper layer to obtain the electrons, as well as avoiding layering.

In addition to including the graphite, the negative electrode active material of the negative electrode plate in the present application further includes silicon. The addition of the silicon aims to improve the capacity of the whole lithium-ion battery. However, due to the expansion of silicon in cycling, the silicon content cannot be excessive in the thick electrode plate, particularly in the high-capacity thick-electrode-plate cell of the present application; the expansion problem is easier to cause layering of the thick electrode plate, resulting in the problem of disconnection of a conductive path of the active material. On the other hand, the expansion of the silicon during the charge-discharge cycle process causes the continuous rupture and regeneration of SEI, the process is accompanied by continuous gas production, and the greater the capacity of the lithium-ion battery is, the more serious the gas production problem caused by the expansion of the silicon is. Therefore, in the present application, it is needed to take into account two factors for the mass content range of the silicon in the negative electrode active material layer, and the two factors are intersected; the first factor is the influence of the capacity of the lithium-ion battery on the silicon content, specifically, when the capacity of the lithium-ion battery is shown as 200Ah≤L≤500Ah, further preferably, 300Ah<L≤500A, the mass content range of the silicon in the negative electrode active material layer is 1%-10%; when the capacity L of the lithium-ion battery is 500Ah<L≤700Ah, the mass content range of the silicon in the negative electrode active material layer is 1%-8%; when the capacity of the lithium-ion battery is shown as 700Ah<L≤1100Ah, the mass content range of the silicon in the negative electrode active material layer is 1%-5%; and the second factor is the influence of the thickness of the active material layer on one surface of the negative electrode plate on the silicon content, specifically, when the thickness of the active material layer on one surface the negative electrode plate is 50-70 µm, the mass content range of the silicon in the negative electrode active material layer is 1%-10%; when the thickness of the active material layer on one surface the negative electrode plate is 70-80 µm, further preferably, the mass content range of the silicon in the negative electrode active material layer is 1%-8%; and when the thickness of the active material layer on one surface of the negative electrode plate is 80-95 µm, further preferably, the mass content range of the silicon in the negative electrode active material layer is 1%-5%.

In the thickness direction of the negative electrode active material layer, silicon is mainly or totally distributed at the lower portion of the negative electrode active material layer, namely the side close to the negative electrode current collector. Further preferably, the silicon content on the surface, close to the negative electrode current collector, in the negative electrode active material layer is higher than that on the surface, far away from the negative electrode current collector, in the negative electrode active material layer, and further preferably, the surface, far away from the negative electrode current collector, in the negative electrode active material layer does not contain silicon.

The lower portion of the negative electrode active material layer in the present application refers to a part, close to one side of the negative electrode current collector, in the negative electrode active material layer in the thickness direction of the negative electrode active material layer; correspondingly, the negative electrode active material layer includes an upper portion, namely the part, far away from one side of the negative electrode current collector, in the negative electrode active material layer. In the present application, the surface, far away from the negative electrode current collector, in the negative electrode active material layer refers to an area which is 20 µm deep from the surface, far away from the negative electrode current collector, of the negative electrode active material layer in the thickness direction of the negative electrode active material layer; in the present application, the surface, close to the negative electrode current collector, in the negative electrode active material layer refers to an area which is 20 µm deep from the surface, close to the negative electrode current collector, of the negative electrode active material layer in the thickness direction of the negative electrode active material layer. The negative electrode active material layer can be cut open, the cut-open interface is observed with a scanning electron microscope (SEM), and element scanning is performed by an EDS (X-ray spectrometer), so that the element content of silicon can be determined.

In the thickness direction of the negative electrode active material layer, silicon is mainly or totally distributed at the lower portion of the negative electrode active material layer, thus the lower portion of the negative electrode active material layer can be pressed by the upper portion of the negative electrode active material layer during the silicon expansion and shrinkage process, thereby relieving adverse effects caused by silicon expansion. Moreover, in the present application, the silicon in the negative electrode active material layer refers to a silicon element, for example, it can specifically include one or more of monatomic silicon, or silicon oxide, or silicon nitride, or silicon-containing salt (such as silicate).

Specifically, the silicon-containing negative electrode active material layer structure in the present application has the following modes:
mode 1: silicon is distributed at both the upper portion and lower portion of the negative electrode active material layer, but the content of silicon at the upper portion of the negative electrode active material layer is less than that at the lower portion of the negative electrode active material layer; specifically, the silicon content at the lower surface (the surface close to the current collector) close to the negative electrode active material layer can be measured, and the silicon content at the upper surface close to the negative electrode active material layer can be measured.
Mode 2: silicon is only distributed at the lower portion of the negative electrode active material layer, the upper portion of the negative electrode active material layer does not contain silicon, specifically, the thickness range 20 µm away from the upper surface of the negative electrode active material layer does not contain silicon, it is because that if the thickness exceeds 20 µm, the negative electrode active material layer at the upper portion cannot play a role in pressing a film at the lower portion.

### Negative electrode plate structure:

In the present application, the negative electrode plate includes the negative electrode current collector and the negative electrode active material layer, in which, the negative electrode current collector can be prepared from a copper foil, or be a carbon-containing fiber current collector or a porous current collector, the negative electrode active material layer is combined with the negative electrode current collector, and the negative electrode active material layer acquires the electrons through the negative electrode current collector during the cycle process of the lithium-ion battery.

The negative electrode plate further includes negative electrode tabs, the negative electrode tabs are electrically connected to the negative electrode current collector, and the negative electrode tabs and the negative electrode current collector can be connected by a plurality of modes, such as welding the negative electrode tabs on the negative electrode current collector, or integrating the negative electrode tabs and the negative electrode current collector (such as cutting the copper foil to form the negative electrode current collector, cutting the negative electrode current collector to form the negative electrode tabs).

The negative electrode current collector can be of various structures, such as a first structure, the negative electrode current collector can be rectangular and includes long edges and short edges, the long edges of the negative electrode current collector are the long edges of the rectangular structure, while the short edges of the negative electrode current collector are the wide edges of the rectangular structure; the negative electrode active material layers are arranged in at least some of the areas in an upper surface and a lower surface of the negative electrode current collector, and the negative electrode tabs are arranged on the short edges of the negative electrode current collector; and the negative electrode current collector can also be of a second structure, the negative electrode current collector is of a rectangular structure and includes the long edges and the short edges, the negative electrode tabs are arranged on the long edges of the negative electrode current collector, and a plurality of negative electrode tabs are arranged on each long edge; the long edges of the negative electrode current collector of the second structure are longer than the long edges of the negative electrode current collector of the first structure, so that it is needed to arrange the plurality of negative electrode tabs on the negative electrode current collector of the second structure, thus reducing heat production at the tab positions of the thick-electrode-plate cell. In the first structure, the negative electrode tabs can be arranged on one or more short edges of the negative electrode current collector. Since the long edges of the negative electrode current collector are relatively long, specifically, the length-width ratio of the negative electrode current collector is greater than 6, electron supply in the whole negative electrode plate is related to the width of the negative electrode tabs, and if the width of the negative electrode tabs is insufficient, the positions of the negative electrode tabs can be seriously heated, and therefore, the ratio of the widths of the negative electrode tabs to the widths of the short edges of the negative electrode current collector is not less than 0.5; and further preferably, the ratio of the widths of the negative electrode tabs to the widths of the short edges of the negative electrode current collector is 0.5-0.8 and cannot exceed 0.8, and in a case of exceeding 0.8, the negative electrode current collector will be very close to the case, and if the case is a conductor, slight impact may cause electrical connection between the negative electrode current collector and the case; further, the ratio of the widths of the negative electrode tabs to the widths of the short edges of the negative electrode current collector is 0.6-0.8, and if the charge rate is not less than 3C, the influence on the positions of the negative electrode tabs is further increased; and therefore, the ratio of the widths of the negative electrode tabs to the widths of the short edges of the negative electrode current collector is set to be not less than 0.6, thus relieving the influence on the positions of the negative electrode tabs (the mode of setting the positions of the negative electrode tabs is the same as that of the negative electrode tabs).

### Preparation technology for negative electrode plate:

The preparation technology for the negative electrode plate includes the following processes:
Process 1: mixing materials containing the negative electrode active material, the conductive agent, the binder and the like to form the negative electrode active material layer. The mixing technology includes two methods: a method 1: mixing the materials such as the negative electrode active material, the conductive agent, the binder, and a solvent of the binder to form liquid-state slurry; coating the liquid-state slurry on the surface of the copper foil serving as the negative electrode current collector or between the surface of carbon fibers serving as the negative electrode current collector and the carbon fibers; after coating, carrying out procedures including drying, rolling and the like to obtain a negative electrode plate precursor for preparing the cell; and a method 2: mixing the materials such as the negative electrode active material, the conductive agent, and the binder (including a small amount of binders and solvents) to form a non-flowable solid or semi-solid mixture; and applying the non-flowable solid or semi-solid mixture on the negative electrode current collector by hot pressing to form the negative electrode plate precursor.
Process 2: slitting the negative electrode plate precursor to obtain the negative electrode plate for use.

On the negative electrode plate precursor formed in the process 1, there is a thin area at the negative electrode active material layer on the surface of the negative electrode current collector, the thin area can be formed by a plurality of modes, for example, in the method 1, a sheet with the negative electrode current collector is coated by a plurality of coating die heads and the coating amount of some of the die heads is less than that of the other die heads during the coating process; during later drying process, the coating area formed by the die heads with the small coating amount is the thin area. Or, gaps among the plurality of coating die heads also can be adjusted so that coating liquid applied by the plurality of coating die heads is not in contact with each other or is in partial contact on the sheet of the negative electrode current collector; during the coating and drying process, the edge of the coating liquid is thin so that the thin area is formed on the edge of the coating liquid;
in the process 2, slitting is carried out along the thin area so that the edge of thee long edge of the obtained negative electrode plate includes the thin area; and the edge thickness of the long edge of the negative electrode plate is less than the thickness of the middle of the negative electrode plate.

According to the above preparation technology, the cost is increased so that the thin area may not be formed from the perspective of the cost, and the edge thickness of the long edge of the slit negative electrode plate is basically the same as the thickness of the negative electrode plate.

### Positive electrode plate:

The positive electrode plate includes the positive electrode current collector and the positive electrode active material layer, the positive electrode active material layer is arranged on at least one surface of the positive electrode current collector and is electrically connected to the positive electrode current collector.

The positive electrode active material layer includes the positive electrode active material; the positive electrode active material can be lithium-containing phosphate such as lithium iron phosphate or lithium manganese iron phosphate, or a ternary positive electrode material such as lithium nickel cobalt manganese oxide or lithium nickel cobalt aluminium oxide or a doped substance of nickel cobalt lithium manganate and nickel cobalt lithium aluminate. Due to the characteristics of the material, the ternary positive electrode material easily produces gas during the charge-discharge cycle process, especially when there is high nickel content in the ternary positive electrode material, it results in an abnormally large number of gas being produced during normal cycling of the high-capacity cell, and in some cases, the gas produced during normal cycling may be sufficient to forcibly open the explosion-proof valve, causing lithium-ion battery failure. Therefore, in the technical solution of the present application, the positive electrode material is preferably the lithium-containing phosphate. However, the lithium-containing phosphate is poor in conductivity, it is needed to coat the carbon layer on the surface of the lithium-containing phosphate. Moreover, compared with the ternary positive electrode material, the lithium-containing phosphate is low in capacity, so that the capacity is improved in a manner of doping metal elements into the lithium-containing phosphate in the present application, specifically, one of or both a metal titanium element and a metal vanadium element can be doped, thereby improving the capacity of the lithium-containing phosphate as well as improving the conductivity, and it is also conducive to improving the charge-discharge speed of the high-capacity cell. In the present application, the doped elements account for not less than 0.4% of the mass of the positive electrode active material (including the lithium-containing phosphate and the carbon layer), specifically, 0.01%-0.4%; more specifically, 0.2%-0.4% of the titanium element can be doped; 0.1%-0.2% of the titanium element can also be doped, while 0.01%-0.05% of the vanadium element is doped. But doping more of the elements is not necessarily better. The inventor carried out charge-discharge research on the high-capacity thick-electrode-plate cell in the present application; the positive electrode active material is lithium iron phosphate containing the doped element; and after the doped element accounts for more than 0.4% of the mass of the positive electrode active material, the lattice structure of lithium iron phosphate will change a lot, which is not conducive to performance implementation.

In addition to including the positive electrode active material (the positive electrode active material in the present application includes lithium-containing phosphate which can be coated with carbon and doped with metal elements), the positive electrode plate further includes the binder and the conductive agent. According to the technical solution of the present application, the compacted density of the active material layer on one surface of the positive electrode plate is 2.3-2.7g/cc (the compacted density is measured when the lithium-ion battery is charged and discharged less than or equal to 100 times; during the preparation of the lithium-ion battery, the electrode plates are usually rolled to increase the compacted density, but the compacted density often rebounds and decreases in the early cycles of the finished lithium-ion battery, the positive electrode plate is rebounded less compared with the negative electrode plate, the surface density of the positive electrode active material layer on one surface is 0.16mg/mm²-0.26mg/mm² ((the surface density is measured when the lithium-ion battery is charged and discharged less than or equal to 100 times), further, the thickness of the active material layer on one surface of the corresponding positive electrode plate is 60-105µm; at the positions, coated with the positive electrode active material layers, on both surfaces of the positive electrode current collector, the thickness of the positive electrode current collector is measured to be 135-225 µm (the thickness of the active material layer on one surface of the positive electrode plate and the thickness of the positive electrode plate are measured when the lithium-ion battery is charged and discharged less than 100 times). Because the thickness of the positive electrode plate in the present application is high, the inventor of the present application further set as that when the positive electrode current collector is prepared from the aluminum foil, and the thickness of the active material layer on one surface of the positive electrode plate is ≤95µm, the thickness of the positive electrode current collector is measured to be D1, and when the thickness of the active material layer on one surface of the positive electrode plate is >95µm, the thickness of the positive electrode current collector is measured to be D2, and D2>D1; by further setting, the D1 is 11-13.5 µm, preferably, 12-13 µm; the D2 is 13.5-16 µm, preferably, 14-15 µm; and the thicker the positive electrode active material layer is, the stronger the current conducting capacity of the required current collector is, and the thicker the corresponding required current collector is.

Because the thickness of the positive electrode plate in the technical solution of the present application is large, in order to keep good electrical contact at each position in the positive electrode active material layer, the conductive agent in the positive electrode active material layer in the present application preferably includes carbon nanotubes, preferably, the single-walled carbon nanotubes and/or the few-walled carbon nanotubes. Compared with other conventional conductive agents such as carbon black, on one hand, the single-walled carbon nanotubes or the few-walled carbon nanotubes have better conductivity; on the other hand, in the thick electrode plate, it is difficult for the active material at the upper portion of the thick electrode plate to obtain electrons during the cycle process of the thick electrode plates, and even the thick electrode plate will be layered; and the single-walled carbon nanotubes or the few-walled carbon nanotubes have a great length-diameter ratio relative to the carbon black, which realizes the effect of fixing the thick electrode plate, thereby improving the capability of the active material at the upper layer to obtain the electrons, as well as avoiding layering.

### Positive electrode plate structure:

In the present application, the positive electrode plate includes the positive electrode current collector and the positive electrode active material layer, in which, the positive electrode current collector can be prepared from the copper foil, or be the carbon-containing fiber current collector or the porous current collector, the positive electrode active material layer is combined with the positive electrode current collector, and the positive electrode active material layer acquires the electrons through the positive electrode current collector during the cycle process of the lithium-ion battery.

The positive electrode plate further includes positive electrode tabs, the positive electrode tabs are electrically connected to the positive electrode current collector, and the positive electrode tabs and the positive electrode current collector can be connected by a plurality of modes, such as welding the positive electrode tabs on the positive electrode current collector, or integrating the positive electrode tabs and the positive electrode current collector (such as cutting the aluminum foil to form the positive electrode current collector, cutting the positive electrode current collector to form the positive electrode tabs).

The positive electrode current collector can be of various structures, such as a first structure, the positive electrode current collector can be rectangular and includes long edges and short edges, the long edges of the positive electrode current collector are the long edges of the rectangular structure, while the short edges of the positive electrode current collector are the wide edges of the rectangular structure; the positive electrode active material layers are arranged in at least some of the areas in the upper surface and the lower surface of the positive electrode current collector, and the positive electrode tabs are arranged on the short edges of the positive electrode current collector; and the negative electrode current collector can also be of a second structure, the positive electrode current collector is of a rectangular structure and includes the long edges and the short edges, the positive electrode tabs are arranged on the long edges of the positive electrode current collector, and a plurality of positive electrode tabs are arranged on each long edge; the long edges of the positive electrode current collector of the second structure are longer than the long edges of the positive electrode current collector of the first structure, so that it is needed to arrange the plurality of positive electrode tabs on the positive electrode current collector of the second structure, thus reducing heat production at the tab positions of the thick-electrode-plate cell. In the first structure, the positive electrode tabs can be arranged on one or more short edges of the positive electrode current collector; the ratio of the widths of the positive electrode tabs to the widths of the short edges of the positive electrode current collector is 0.5-0.8, further 0.6-0.8, and cannot exceed 0.8; and the ratio setting principle is the same as that of negative electrode tabs, which will not be listed here.

In the present application, the positive electrode plate structure and the positive electrode tabs as well as the preparation process for the positive electrode plate are similar to those of the negative electrode plate, which will not be listed here; but it is still to be noted that in some embodiments of the present application, the positive electrode tabs are not uniformly distributed on the positive electrode current collector, the distance from the upper end of each positive electrode tab to the upper end of the positive electrode plate is a third distance h3, the distance from the lower end of each positive electrode tab to the lower end of the positive electrode plate is a fourth distance h4, and h3>h4.

In the present application, the specific testing method for the thickness of the negative electrode plate or the thickness of the positive electrode plate includes: discharging the lithium-ion battery which is charged and discharged for 1-100 circles to reach voltage of 2.5 V, in which, reaching this voltage is considered that the lithium-ion battery is discharged completely; then disassembling the lithium-ion battery to obtain the positive electrode plate and the negative electrode plate; cleaning the positive electrode plate and the negative electrode plate with the solvent of electrolyte solution, such as an EC solution, so as to remove lithium salt or other residues on the surfaces of the positive electrode plate and the negative electrode plate; then drying the solvent; and measuring the thickness of the positive electrode plate and the thickness of the negative electrode plate.

In the present application, the testing method for the particle size of the active material includes: discharging the lithium-ion battery which is charged and discharged for 1-100 circles to reach the voltage of 2.5 V, in which, reaching the voltage is considered that the lithium-ion battery is discharged completely; then disassembling the lithium-ion battery to obtain the positive electrode plate and the negative electrode plate; cleaning the positive electrode plate and the negative electrode plate with the solvent of the electrolyte solution, such as the EC solution, so as to remove lithium salt or other residues on the surfaces of the positive electrode plate and the negative electrode plate; then drying the solvent; then carrying out high-temperature treatment (such as 500-600°C) on the electrode plates in an inert atmosphere, so as to inactivate the binder in the electrode plates; after the high-temperature treatment, pulverizing the electrode plates to obtain the active material; then sieving the pulverized active material (by pressing); and taking a lower-layer particle sample for particle size test.

In the present application, for the circles (such as 100 circles), one cycle refers to one charge followed by one discharge, more specifically, in actual use, it may not be a full charge or a full discharge, but as long as there is one charge followed by a discharge until the next charge begins, it is counted as one cycle.

### Separator:

The separator in the solution of the present application includes a base membrane which includes fibers, and the materials of the base member include PP or PE; a coating is arranged on the surface of the base membrane and includes inorganic substances and inorganic particles; the coating is coated and adhered to the surface of the base membrane and partially permeates into the base membrane; due to the existence of the coating, lithium dendrites generated by the negative electrode plate can be well inhibited from penetrating through the separator to cause short circuit in the lithium-ion battery; however, the separator cannot be completely closed by the coating, and the electrolyte solution still needs to pass through the separator, so that the porosity of the separator is set to be 30%-50%.

### Electrolyte solution:

The electrolyte solution includes lithium salt and a solvent, the lithium salt includes lithium hexafluorophosphate (LiPF₆). However, the lithium hexafluorophosphate is low in thermal stability, and will be decomposed into phosphorus pentafluoride (PF₅) and lithium fluoride (LiF) from 80°C, the phosphorus pentafluoride (PF₅) can further react with water to generate hydrogen fluoride gas, and the lithium fluoride (LiF) can further react with the solvent such as DMC to generate gas, therefore, the influence of the lithium hexafluorophosphate on gas production of the high-capacity cell cannot be ignored. Moreover, with the increase of the capacity of the lithium-ion battery, the accumulated temperature in the cell is higher and higher, and thus the influence of the LiPF₆ on gas production in the high-capacity cell is higher and higher.

Another lithium salt is lithium bis(fluorosulfonyl)imide (LiFSI) which is high in thermal stability, and the decomposition temperature is 200°C, which is conducive to release the problem of gas production caused by temperature rise. In view of some reasons, the lithium bis(fluorosulfonyl)imide (LiFSI) is extremely high in cost, so that the lithium hexafluorophosphate (LiPF₆) still needs to be remained in the lithium salt of the electrolyte solution; in addition, the LiFSI has a certain corrosion effect on the aluminum foil of the positive electrode current collector, and such corrosion effect can be relieved by the LiPF₆. In comprehensive consideration, the volume molar content of the LiPF₆ is higher than that of the LiFSI.

During the cycle process of the lithium-ion battery, particularly during the process of forming SEI through first charging and discharging, a large number of lithium salt will be consumed, so the content of the lithium salt in the finished lithium-ion battery in cycling is more monitored in the solution of the present application. Specifically, it is measured when the lithium-ion battery is charged and discharged 5 to 100 times, and the volume molar content of the lithium salt is 0.8-1.5 mol/L under the condition that the lithium salt includes lithium hexafluorophosphate (LiPF₆) and lithium bis(fluorosulfonyl)imide (LiFSI); and in order to reduce corrosion to aluminum foil, the mass of the LiFSI is further limited to be 0.1-9% of the mass of the electrolyte solution.

On the other hand, because the gas production rate is increased after the capacity of the lithium-ion battery is increased, after the capacity of the lithium-ion battery is greater than 300 Ah, the LiFSI accounts for not less than 1% of the mass of the electrolyte solution.

According to the capacity and cost of the lithium-ion battery, when the capacity L of the lithium-ion battery is 200Ah≤L≤300Ah, the LiFSI accounts for 0.1%-9% of the mass of the electrolyte solution, and in view of cost, the LiFSI preferably accounts for 0.1%-5% of the mass of the electrolyte solution; when the capacity L of the lithium-ion battery is 300Ah<L≤500Ah, the LiFSI accounts for 1%-9% of the mass of the electrolyte solution, and in view of cost, the LiFSI preferably accounts for 1%-5% of the mass of the electrolyte solution; when the capacity L of the lithium-ion battery is 500Ah<L≤700Ah, the LiFSI accounts for 3-9% of the mass of the electrolyte solution; and when the capacity L of the lithium-ion battery is 700Ah<L≤1100Ah, the LiFSI accounts for 5-9% of the mass of the electrolyte solution.

In the electrolyte solution in the present application, the solvent includes EC, DMC, EMC, and DEC, specifically, the corresponding Chinese names are ethylene carbonate (EC), dimethyl carbonate (DMC), diethyl carbonate (DEC), and ethyl methyl carbonate (EMC). Because EC is cyclic carbonate which has a high dielectric constant and high ionic conductivity and can form a stable SEI film on the surface of the negative electrode, and its high viscosity influences the diffusion of the lithium ions, the content of EC is 30-40%; DMC and EMC are both chain carbonates with the viscosity generally lower than that of the cyclic carbonate, it is needed to control mass sum of DMC and EMC of the thick-electrode-plate lithium-ion battery in the present application to be greater than the mass of EC, and the total content of EMC and DMC is further controlled to be 50%-60%. Compared with EMC, DMC has a low boiling point and easily produces gas, so it is needed to control the mass of EMC to be higher than that of DMC in order to control the high temperature gas production. The viscosity of DMC is low, so the climbing (horizontal and vertical diffusion ability) of the electrolyte solution on a long electrode plate and the separator is benefited, and DMS is needed, with the content of 10%-15%. The content of EC is obtained by dividing the mass of EC by the difference between the mass of the electrolyte solution and the mass of lithium salt, namely the mass of EC/(the difference between the mass of the electrolyte solution and the mass of the lithium salt); similarly, the total content of EMC and DMC is obtained by dividing the total mass of EMC and DMC by the difference between the mass of the electrolyte solution and the mass of the lithium salt, namely the total mass of EMC and DMC/(the difference between the mass of the electrolyte solution and the mass of the lithium salt); and the content of DMC is obtained by dividing the mass of DMC by the difference between the mass of the electrolyte solution and the mass of the lithium salt, namely the mass of DMC/(the difference between the mass of the electrolyte solution and the mass of the lithium salt).

In some embodiments, a certain amount of carboxylic ester is added into the electrolyte solution, the content of carboxylic ester is obtained by dividing the mass of carboxylic ester by the difference value between the mass of the electrolyte solution and the mass of lithium salt, namely the content of the carboxylic ester is the mass of carboxylic ester /(the difference between the mass of the electrolyte solution and the mass of the lithium salt); the carboxylic ester is beneficial to film formation of the negative electrode during the charge-discharge process of the lithium-ion battery, so that the ionic conductivity is improved, and gas production at the interface of the negative electrode is reduced. However, if the content of the carboxylic ester is too high, the gas production rate will be increased, especially in a rapid charging system. In some embodiments of the present application, the content of the carboxylic ester does not exceed 10%.

In some embodiments, the carboxylic ester can be matched with LiFSI for use, thereby reducing gas production, and the most intuitive effect is to reduce the use amount of the LiFSI, and thus the cost is decreased. Specifically, when the content of the carboxylic ester is 5%-10%, the capacity L of the lithium-ion battery is 200Ah≤L≤300Ah, and the LiFSI accounts for 0.1%-5% of the mass of the electrolyte solution; when the capacity L of the lithium-ion battery is 300Ah<L≤500Ah, the LiFSI accounts for 1%-5% of the mass of the electrolyte solution; when the capacity L of the lithium-ion battery is 500Ah<L≤700Ah, the LiFSI accounts for 2%-7% of the mass of the electrolyte solution; and when the capacity L of the lithium-ion battery is 700Ah<L≤1100Ah, the LiFSI accounts for 3%-8% of the mass of the electrolyte solution.

### Cell structure:

The cell structure in the present application includes the positive electrode plate, the negative electrode plate, and the separator, and the cell structure in the present application can be a laminated structure or a winding structure. The solution in the present application is suitable for a large cell, and the capacity of the lithium-ion battery is 200-1,100 Ah.

No matter the cell is the laminated structure or the winding structure, it is always vertically placed during the use process, the wider the cell is, the longer the distance for the electrolyte solution to climb from the lower end of the cell to the upper end is, the electrolyte solution mainly passes through the separator when climbing from the lower end of the cell to the upper end, specifically, it is related to the porosity of the separator; particularly, in the later period of the cycle of the lithium-ion battery, the volume of the electrolyte solution in the case is reduced, and if the electrolyte solution at the bottom of the case cannot climb to the upper end of the cell, the electrode plate at the upper end of the cell cannot be in contact with the electrolyte solution or the electrolyte solution is less, leading to non-uniform deposition of the lithium ions on the negative electrode to generate a large number of lithium dendrites, resulting in increase in the gas production rate. On the other hand, the wider the cell is, the more difficult the heat in the middle of the cell is dissipated, thus the heat in the middle of the cell is concentrated to cause the increase of the gas production rate of the cell, and high porosity of the separator is also beneficial to heat dissipation to a certain extent. However, the porosity of the separator cannot be too high, otherwise, the lithium dendrites on the negative electrode are easily increased due to non-uniform current density during the charging process, resulting in increase in the gas production rate, particularly during high-rate charging. Under the component of the electrolyte solution in the present application, when the width of the negative electrode plate is 100-150 mm, the porosity of the separator is 30%-50%; and when the width of the negative electrode plate is 200-250 mm, the porosity of the separator is 35%-50%. According to the capacity requirements of the cell, when the width of the negative electrode plate is 100-150 mm, the length-width ratio of the cell is preferably 6-8; and when the width of the negative electrode plate is 200-250 mm, the length-width ratio of the cell is preferably 2.8-4.

### Lithium-ion battery:

The lithium-ion battery in the present application includes the case, the cell, and the electrolyte solution; and the electrolyte solution and the cell are arranged in the case. The case is sealed and includes a positive electrode terminal post, a negative electrode terminal post, and an explosion-proof valve. The positive electrode terminal post is electrically connected to the positive electrode tabs, while the negative electrode terminal post is electrically connected to the negative electrode tabs; and the positive electrode terminal post and the negative electrode terminal post can be arranged at both ends of the case respectively or at the same end of the case.

The explosion-proof valve is arranged at a first end of the case, and at least one of the positive electrode terminal post and the negative electrode terminal post is also arranged at the first end of the case.

Preferably, the explosion-proof valve is arranged at the edge, provided with the positive electrode terminal post, of the case, namely the explosion-proof valve is arranged at the first end of the case; and the positive electrode terminal post is also arranged at the first end of the case. A first upper exhaust channel is formed between the upper ends of the positive electrode tabs and the case; in the airflow direction of the first upper exhaust channel, a projection region of the explosion-proof valve is partially overlapped with the projection region of the first upper exhaust channel. Furthermore, in the airflow direction of the first upper exhaust channel, the overlap ratio of the projection region of the explosion-proof valve and the projection region of the first upper exhaust channel exceeds 80%.

Or, the explosion-proof valve is arranged at the edge of one end, provided with the negative electrode terminal post, of the case, namely the explosion-proof valve is arranged at the first end of the case; and the negative electrode terminal post is also arranged at the first end of the case. A second upper exhaust channel is formed between the upper ends of the negative electrode tabs and the case; in the airflow direction of the second upper exhaust channel, the projection region of the explosion-proof valve is partially overlapped with the projection region of the second upper exhaust channel; and furthermore, in the airflow direction of the second upper exhaust channel, the overlap ratio of the projection region of the explosion-proof valve and the projection region of the second upper exhaust channel exceeds 80%.

The overlap ratio of the projection region of the explosion-proof valve and the projection region of the first upper exhaust channel refers to the ratio of the area of the overlap area of the projection region of the explosion-proof valve and the projection region of the first upper exhaust channel to the area of the projection region of the first upper exhaust channel in the airflow direction of the first upper exhaust channel. Similarly, the overlap ratio of the projection region of the explosion-proof valve and the projection region of the second upper exhaust channel refers to the ratio of the area of the overlap area of the projection region of the explosion-proof valve and the projection region of the second upper exhaust channel to the area of the projection region of the second upper exhaust channel in the airflow direction of the second upper exhaust channel.

The partial overlapping of the projection region of the explosion-proof valve to the projection region of the first upper exhaust channel or the projection region of the second upper exhaust channel in the direction of airflow is to ensure that the explosion-proof valve can be rapidly forced open when the gas pressure in the lithium-ion battery is excessively high in an abnormal condition, and thus the gas pressure is prevented from being accumulated in the case to cause explosion. The overlap ratio of the explosion-proof valve and the first upper exhaust channel or the second upper exhaust channel exceeds 80%, it is because the high-capacity cell (the capacity of the lithium-ion battery is greater than or equal to 200 Ah) in the present application has extremely large gas production rate under the abnormal condition; experiment and simulation of the inventor, if the overlap ratio is less than 80%, some lithium-ion batteries will explode. In order to further prevent the lithium-ion battery from exploding, the inventor further optimized the high-capacity cell (the capacity of the lithium-ion battery is greater than or equal to 200 Ah) as that: the ratio of the area of the explosion-proof valve to the capacity of the lithium-ion battery is 0.5mm²/Ah-1.5mm²/Ah, and it is further defined that when the capacity of the lithium-ion battery is less than 600 Ah, the ratio of the area of the explosion-proof valve to the capacity of the lithium-ion battery will be less than or equal to 1 mm²/Ah; and when the capacity of the lithium-ion battery is greater than or equal to 600 Ah and less than 1,200 Ah, the ratio of the area of the explosion-proof valve to the capacity of the lithium-ion battery will be less than or equal to 1.5 mm²/Ah. In order to further prevent the lithium-ion battery from exploding, the applicant further optimized the high-capacity cell (the capacity of the lithium-ion battery is greater than or equal to 200 Ah) of the present application as that: after the length-width ratio of the cell is greater than 2.8, a plurality of explosion-proof valves are provided and are locate on the upper half portion of the lithium-ion battery, and the upper half portion of the lithium-ion battery is placed relative to the actual using scenario of the lithium-ion battery. During actual use of the lithium-ion battery, there will be a large number of free electrolyte solutions in the lithium-ion battery at the initial stage of cycle, and if the explosion-proof valve is forced opened under the abnormal condition, it is expected to prevent the electrolyte solution from being sprayed out together with the produced gas to further cause other external short circuits, therefore, it is needed to arrange the explosion-proof valve on the upper half portion of the lithium-ion battery, and even there are the plurality of explosion-proof valves, each one is to be arranged on the upper half portion of the lithium-ion battery.

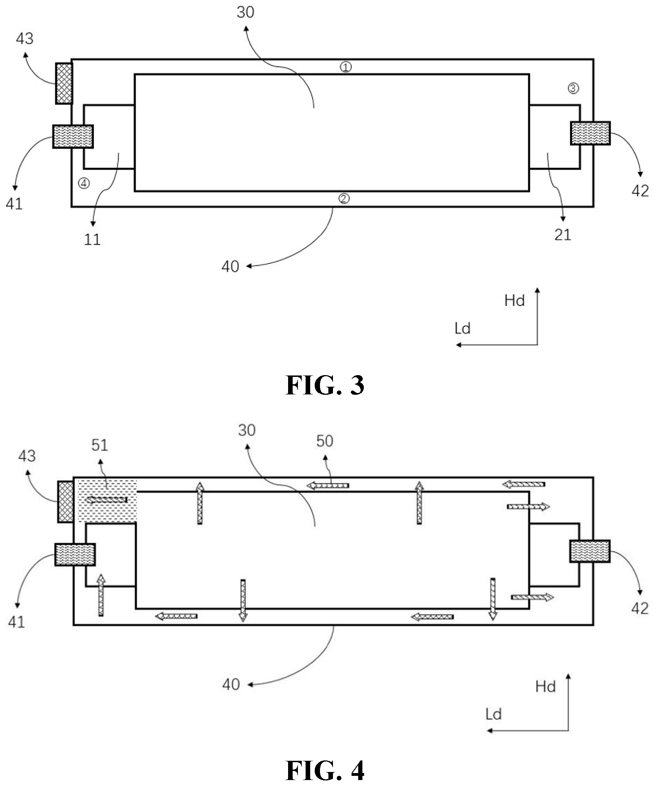

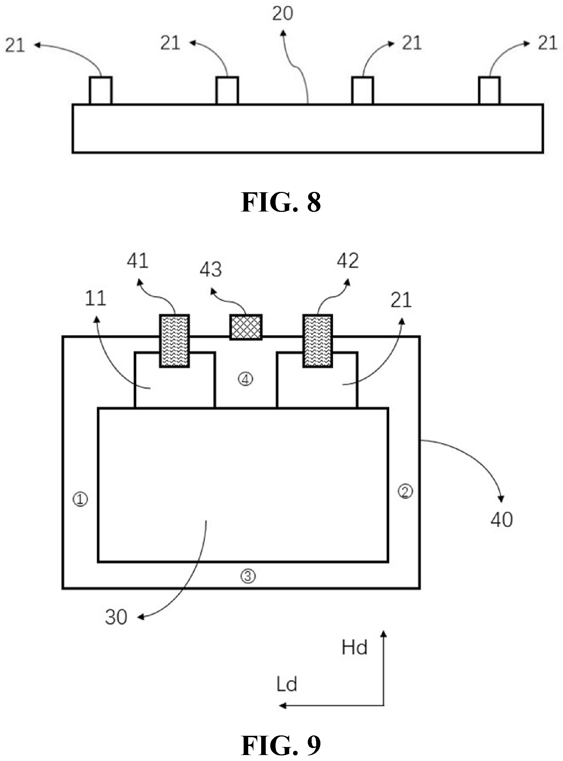

The explosion-proof valves can be located on short edges of both sides of the lithium-ion battery (as shown in FIG. 3) and can also be located on long edges of the lithium-ion battery, and there are a plurality of setting modes, one mode is as shown in FIG. 9 in the present application.

The following setting mode can also be used: the explosion-proof valves are located on the long edges of the cases, the positive electrode tabs are located on the short edges of the positive electrode current collector, the negative electrode tabs are located on the short edges of the negative electrode current collector, the positive electrode tabs and the negative electrode tabs are respectively located at both ends of the cell, and the positive electrode tabs and/or the negative electrode tabs are symmetrically arranged relative to the electrode plate (in other setting modes, at least one reason of asymmetric arrangement is to reserve a space for the explosion-proof valve or other devices (such as a liquid injection channel), and meanwhile, in order to realize the discharge capability of the tabs, the tabs need to have certain widths, so the tabs are often moved downwards relative to the upper end of the electrode plate; but there will be a risk of contacting the case during downward movement of the tabs, so it is needed to control the distance from the lower edges of the tabs to the case); and after the explosion-proof valves are located on the long edges of the case and the tabs are located on the short edges of the current collectors (terminal posts are also located on the short edges of the case), there is no need to worry too much about the edges of the tabs being too close to the case and causing a short circuit because the explosion-proof valves are arranged on the long edges, and the tabs can be symmetrically arranged relative to the short edges of the current collectors, and the ratio of the widths of the tabs to the short edges of the current collectors can be correspondingly increased and can be set to be 0.7-0.8, thus improving the discharge capability of the tabs.

According to the present application, the specific structure of the explosion-proof valve is not limited as long as the parts, which are forced open under abnormal conditions, on the case can play a role of the explosion-proof valve; if the case is formed by an aluminum-plastic film, a weak area packaged by the aluminum-plastic film can play a role of the explosion-proof valve, at the moment, the weak area may be of a linear structure, and the area of the explosion-proof valve is calculated by taking the length of the weak area as the area of a square corresponding to the perimeter.

If the plurality of explosion-proof valves are provided, there will be a plurality of solution designs, for example, two explosion-proof valves are provided, and the two explosion-proof valves are respectively located on two opposite short edges of the lithium-ion battery, it is needed to symmetrically arrange the two explosion-proof valves at the moment, otherwise, the other explosion-proof valve cannot be started after one explosion-proof valve is started; for another example, two explosion-proof valves are provided, and the two explosion-proof valves are located on the long edge of the upper end of the lithium-ion battery, it is needed to symmetrically distribute the two explosion-proof valves relative to the long edge of the lithium-ion battery at the moment, the symmetrical distribution refers to that the distances from each explosion-proof valve to the middle points of the long edges of the lithium-ion battery are equal, it is because for a long cell, if an abnormal condition (such as collision) occurs at a position close to the middle part of the cell, a large number of gas may be rapidly produced at the collision position and cannot be rapidly transferred to the explosion-proof valves at both ends of the cell, resulting in explosion of the lithium-ion battery; for yet another example, three explosion-proof valves are provided, and the two explosion-proof valves are respectively and symmetrically arranged on the two opposite short edges of the lithium-ion battery, the third explosion-proof valve is arranged on the long edge of the lithium-ion battery, preferably, the third explosion-proof valve is arranged in the middle of the long edge, it is because for the long cell, if the abnormal condition (such as collision) occurs at the position close to the middle part of the cell, a large number of gas may be rapidly generated at the collision position and cannot be rapidly transferred to the explosion-proof valves at both ends of the cell, resulting in explosion of the lithium-ion battery.

When the cell is the laminated cell, the positive electrode terminal post and the negative electrode terminal post are respectively arranged at both ends of the case and can also be arranged at the same end of the case; and when the cell is the winding cell, preferably, the positive electrode terminal post and the negative electrode terminal post are arranged at the same end of the case.

### Gas production analysis:

During the preparation process of the lithium-ion battery, thee SEI layer is formed on the surface of the active material of the negative electrode plate during first charge-discharge, a large number of gas will be produced in this process, it needs a gas exhaust procedure to exhaust part of gas out of the lithium-ion battery, then the case is sealed, and the battery-ion battery is delivered as a finished lithium-ion battery. The use process of the finished lithium-ion battery includes normal charge-discharge cycle use and also includes abnormal use environments such as high temperature and collision. In the normal use environments, along with the charge-discharge cycle process, lithium will be continuously intercalated and de-intercalated between the graphite layers in the negative electrode, which will expand the volume of graphite, and may strip the graphite layers; these factors may damage the SEI on the surface of the active material of the negative electrode and cause regeneration of the SEI, and gas will produced during the process of regenerating the SEI. In addition, along with lithium intercalation of the graphite, particularly for the thick electrode plate, some lithium ions are not intercalated between the graphite layers in time, thus the lithium dendrites are precipitated out on the surface of the active material of the negative electrode; some of the precipitated metal lithium dendrites will react with the electrolyte solution, thus the SEI is generated, accompanied by electrolyte solution consumption and gas production. The positive electrode plate also produces gas during the charge-discharge process; when a ternary material is used as the positive electrode active material, a large number of gas will be produced; however, according to the technical solution in the present application, lithium-containing phosphate is adopted, so that the gas production rate of the positive electrode is low. When the lithium-ion battery is abnormally used, such as high temperature, the specific reaction part in the lithium-ion battery is shown as follows:
when the temperature of the lithium-ion battery exceeds 80°C, organic lithium in the SEI film will be decomposed to produce gas, and lithium hexafluorophosphate will be decomposed and react with the solvent to produce gas;
when the temperature of the lithium-ion battery exceeds 120°C, most of the SEI film on the surface of the negative electrode is decomposed, so that substances such as lithium in the negative electrode react with an organic solvent to produce gas;
when the temperature of the lithium-ion battery is 110-300°C, a large number of lithium hexafluorophosphate will be decomposed, and the electrolyte solution will react heavily to produce gas;
when the reaction temperature of the lithium-ion battery exceeds 300°C, lithium-containing phosphate will be decomposed to produce gas, and the electrolyte solution is further induced to be decomposed to produce gas;
in addition, when the temperature of the lithium-ion battery exceeds 235°C, the binder PVDF used for the positive and negative electrode plates also starts to be decomposed.

The gas production in the early stage of thermal runaway is relatively mild, and if the lithium-ion battery is stopped charging and discharging as soon as possible and cooled, the thermal runaway can be further prevented, the SEI film can be formed on the negative electrode of the lithium-ion battery again, and the lithium-ion battery can be continuously used; if the thermal runaway is not prevented in time, along with accumulation of a large number of heat in the middle and later stages of the thermal runaway, a large number of gas will be produced, which increases the gas pressure in the lithium-ion battery greatly, consequently, the explosion-proof valve is forced open; although the explosion-proof valve prevents the explosion reaction of the lithium-ion battery, the lithium-ion battery cannot be continuously used after the explosion-proof valve is opened.

According to the technical solution in the present application, the characteristics of the positive electrode plate, the negative electrode plate, the separator, the electrolyte solution, the cell structure and the like in the lithium-ion battery are continuously optimized, and the gas production rate under the normal use condition is reduced as much as possible, thus the gas produced in the life cycle (such as 3,000 cycles of charge-discharge) of the lithium-ion battery in normal use is insufficient to force open the explosion-proof valve; further, space can be reserved for the gas produced in thermal runaway as much as possible, so that the lithium-ion battery cannot force open the explosion-proof valve in the early stage of thermal runaway. Specifically, if the gas production rate in the normal cycle process is low, the gas produced in the early stage of the thermal runaway will be superposed and still be insufficient to reach the gas pressure for opening the explosion-proof valve, and the explosion-proof valve will not be forced open; at the moment, if the thermal runaway is further prevented, the lithium-ion battery can be continuously used. More specifically, the gas pressure for opening the explosion-proof valve is generally 0.6-1 Mpa; in the present application, in order to ensure the safety of the lithium-ion battery, the gas pressure for opening the explosion-proof valve is designed to be 0.55-0.65 Mpa; in order to reserve a gas space for thermal runaway, in the present application, it is designed as that the internal pressure of the lithium-ion battery is not greater than 0.35 Mpa after the lithium-ion battery is charged and discharged by 3,000 cycles at 40°C.

There is a theoretical gas storage space in the case besides the cell and the electrolyte solution. The theoretical gas storage space usually represents the maximum gas storage capacity reserved when designing the battery. The theoretical gas storage space is refers to the space that is between the cell and the case and is not filled with the added electrolyte solution during the lithium-ion battery preparation process, and the space formed by the electrolyte solution that is continuously consumed during the lithium-ion battery cycle process, and two factors jointly define the theoretical gas storage space in the lithium-ion battery. Especially in the later period of lithium-ion battery cycle, a large number of electrolyte solutions are consumed, the remained electrolyte solution is mostly located in pores of the separator, so few electrolyte solutions are between the cell and the case. When during the theoretical gas storage space in the present application, on one hand, the space between the cell and the case in the thickness direction of the cell is ignored because during the lithium-ion battery preparation process, the thickness of the cell is almost the same as that of the case in the thickness direction of the cell, the reserved space is small, the cell is almost attached to the case in the thickness direction of the cell due to the factors such as expansion of the cell after cycle and filling of the cell with the electrolyte solution, and therefore, the space between the cell and the case in the thickness direction of the cell can be ignored; on the other hand, as cycle goes on, especially in the later period of battery cycle, a large number of electrolyte solutions are consumed, the remained electrolyte solution is mostly located in the pores of the separator, and few electrolyte solutions are between the cell and the case. Therefore, the space between the cell and the case in the width direction of the cell and the space between the cell and the case in the length direction of the cell can be calculated, and the sum is the actual gas storage space.

Specifically, when designing the cell in the present application, the capacity is preset firstly, and thus the needed theoretical gas storage space V0 can be calculated according to the relationship between the volume and the capacity; and for the finished lithium-ion battery, the capacity of the lithium-ion battery is the capacity under the charge-discharge rate of 0.33C.

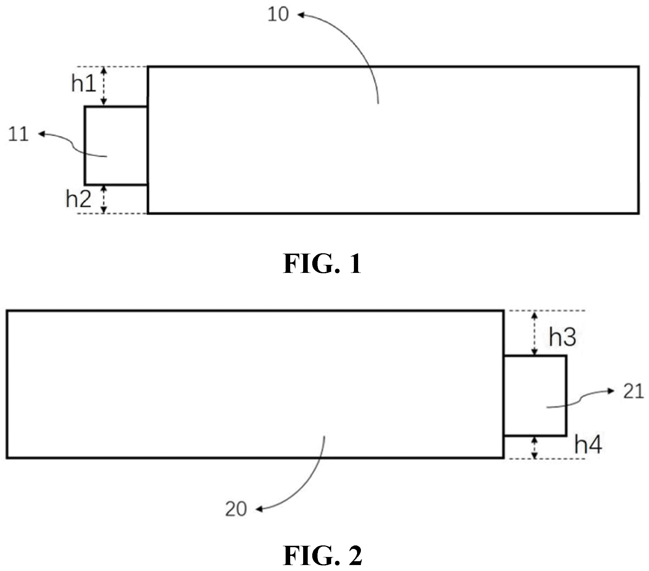

The solution in the present application is suitable for various lithium-ion battery structures, and is described below in combination with the accompanying drawings:
The square laminated lithium-ion battery in FIG. 1, FIG. 2, FIG. 3, and FIG. 4 has the length-width ratio of 6.5, the lithium-ion battery includes a case 40, a cell 30 and an electrolyte solution (not shown in the figure) which are arranged in the case 40; a positive electrode plate 10 in FIG. 1, a negative electrode plate 20 in FIG. 2, and the separator (not shown in the figure) are laminated to form the cell 30; and the case 40 also includes a positive electrode terminal post 41, a negative electrode terminal post 42, and an explosion-proof valve 43.

Both the positive electrode plate 10 and the negative electrode plate 20 are of square structures, the square structures ignore the overall shape of the tabs; the positive electrode plate 10 includes positive electrode tabs 11, a positive electrode current collector, and a positive electrode active material layer; the positive electrode current collector is of a rectangular structure; and the positive electrode tabs 11 are arranged on a short edge of the positive electrode current collector and are asymmetrically distributed on the short edge of the positive electrode current collector. In the width direction of the cell, namely in the short edge direction of the positive electrode current collector, the vertical distance from the upper ends of the positive electrode tabs 11 to the upper end of the positive electrode plate 10 is the first distance h1, while the vertical distance from the lower ends of the positive electrode tabs 11 to the lower end of the positive electrode plate 10 is a second distance h2, and h1 is greater than h2; and the ratio of the widths of the positive electrode tabs 11 to the width of the short edge of the positive electrode current collector is 0.75. The negative electrode plate 20 includes negative electrode tabs 21, a negative electrode current collector, and a negative electrode active material layer; the negative electrode current collector is of a rectangular structure; and the negative electrode tabs 21 are arranged on the short edge of the negative electrode current collector and are asymmetrically distributed on the short edge of the negative electrode current collector. In the width direction of the cell, namely in the short edge direction of the negative electrode current collector, the vertical distance from the upper ends of the negative electrode tabs 21 to the upper end of the negative electrode plate 20 is a third distance h3, while the vertical distance from the lower ends of the negative electrode tabs 21 to the lower end of the negative electrode plate 20 is a fourth distance h4, and h3 is greater than h4; and the ratio of the widths of the negative electrode tabs 21 to the width of the short edge of the negative electrode current collector is 0.75.

The cell 30 is formed by stacking a plurality of positive electrode plates 10, a plurality of negative electrode plates 20 and the separator; the positive electrode tabs 11 is arranged on one short edge of each positive electrode plate 10; the negative electrode tabs 21 is arranged on one short edge of each negative electrode plate 20; and the positive electrode tabs 11 and the negative electrode tabs 21 are respectively located at both ends of the cell 30;

The positive electrode terminal post 41 is electrically connected to the positive electrode tabs 11; the negative electrode terminal post 42 is electrically connected to the negative electrode tabs 21; the positive electrode terminal post 41 and the negative electrode terminal post 42 are arranged at both ends of the case 40; and the explosion-proof valve 43 is arranged at the edge of one end, provided with the positive electrode terminal post 41, of the case 40. As shown in FIG. 3 and FIG. 4, a first upper exhaust channel 51 is formed between the upper end of each positive electrode tab 11 and the case 40; the end of the case 40 connected to the corresponding positive electrode tabs 11 includes the explosion-proof valve 43; and in the airflow direction (the horizontal direction in FIG. 4, namely the length direction Ld of the cell) of the first upper exhaust channel 51, the explosion-proof valve 43 partially overlaps with the first upper exhaust channel 51. Specifically, in the airflow direction of the first upper exhaust channel 51, the overlap ratio of the explosion-proof valve 43 to the first upper exhaust channel 51 is 85%, namely, in the vertical direction (namely the height direction Hd, which is the width direction of the lithium-ion battery) in FIG. 4, the ratio of the width of the explosion-proof valve 43 to the width of the first upper exhaust channel 51 is 85%. FIG. 4 shows the flow direction of gas in the lithium-ion battery; most of gas produced in the cell 30 is discharged out of the cell 30 through pores between the electrode plates or the separator along the edges of the electrode plates; in normal cycle, the gas is continuously and relatively slowly produced, and is relatively uniformly dispersed in the case 40 due to its mobility, and part of gas is concentrated at the position of the first upper exhaust channel 51; and under an abnormal condition, the gas is rapidly produced, so the gas pressure in the case 40 increases, therefore, the gas pressure in the first upper exhaust channel 51 increases, and as a result, the explosion-proof valve 43 is forced open.

As shown in FIG. 3, in the thickness direction of the electrode plates, namely, the thickness direction of the cell 30 (the thickness direction in the figure is the direction perpendicular to the plane of the view diagram, namely the direction perpendicular to Hd and Ld), the gap between the cell 30 and the case 40 is small, and the cell 30 mainly expands in the thickness direction during cycle, so that the gap between the cell 30 and the case 40 after cycle is further reduced; when calculating the actual gas storage space, the thickness direction can be ignored, and only spaces between the cell 30 and the case 40 in the length direction of the cell 30 and the height direction (also the width direction) of the cell 30 are calculated, namely the spaces at ①②③④⑤ in FIG. 3.

FIG. 1 to FIG. 4 are only schematic, the explosion-proof valve 43 can also be arranged at the edge of one end, provided with the negative electrode terminal post 42, of the case 40, namely, in FIG. 3 or FIG. 4, the explosion-proof valve 43 is arranged on the short edge at the right side of the lithium-ion battery.

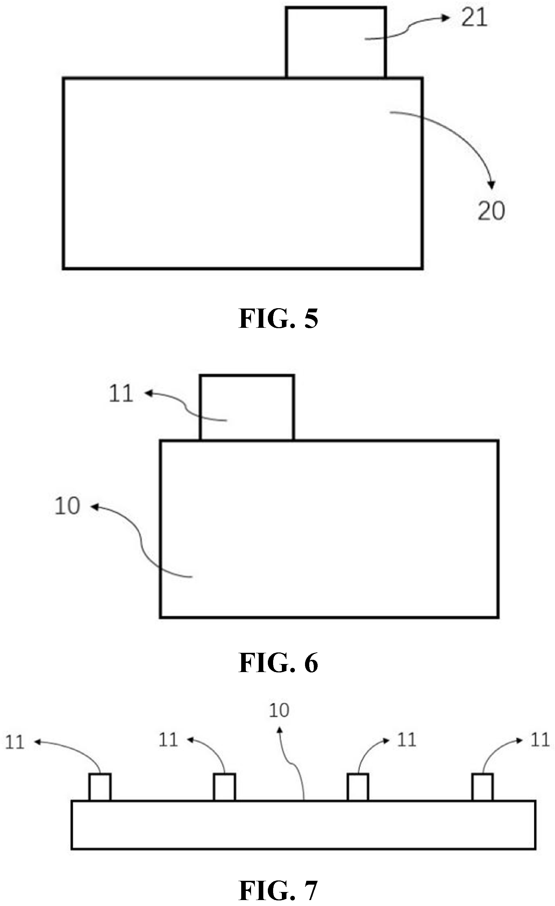

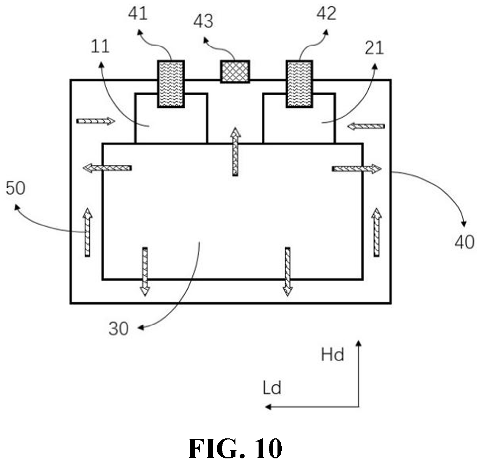

FIG. 5, FIG. 6, FIG. 9, and FIG. 10 show another lithium-ion battery structure of the present application, the length-width ratio of the lithium-ion battery is 3, and the lithium-ion battery also includes the case 40, the cell 30 and the electrolyte solution (not shown in the figure) which are located in the case 40; the negative electrode plate 20 in FIG. 5, the positive electrode plate 10 in FIG. 6, and the separator (not shown in the figure) are stacked to form the cell 30, and the case 40 further includes the positive electrode terminal post 41, the negative electrode terminal post 42, and the explosion-proof valve 43. The positive electrode plate 10 and the negative electrode plate 20 are both of a square structure, and the square structures ignore the overall shape of the tabs. The positive electrode plate includes the positive electrode tabs 11, the positive electrode current collector, and the positive electrode active material layer; the positive electrode current collector is of a rectangular structure; and the positive electrode tabs 11 are arranged on one long edge of the positive electrode current collector. The negative electrode plate 20 includes the negative electrode tabs 21, the negative electrode current collector, and the negative electrode active material layer; the negative electrode current collector is of a rectangular structure; the negative electrode tabs 21 are arranged on one long side of the negative electrode current collector. The cell 30 is formed by laminating a plurality of positive electrode plates 10, a plurality of negative electrode plates 20 and the separator; the positive electrode tabs 11 are arranged on one long side of each positive electrode plate 10; the negative electrode tabs 21 is arranged on one long side of each negative electrode plate 20; and the positive electrode tabs 11 and the negative electrode tabs 21 are located at the upper end of the cell 30. The positive electrode terminal post 41 is electrically connected to the positive electrode tabs 11; the negative electrode terminal post 42 is electrically connected to the negative electrode tabs 21; the positive electrode terminal post 41 and the negative electrode terminal post 42 are arranged at the upper end of the case 40; and the explosion-proof valve 43 is arranged between the positive electrode terminal post 41 and the negative electrode terminal post 42. FIG. 10 is a schematic diagram of an airflow direction. As shown in FIG. 9, in the thickness direction of the electrode plates, namely the thickness direction of the cell 30 (the thickness direction in the figure is the direction vertical to the plane of the view diagram, namely the direction vertical to Hd and Ld), the gap between the cell 30 and the case 40 is small, the cell 30 mainly expand in the thickness direction, so the gap between the cell 30 and the case 40 after cycle is further reduced, and therefore, the thickness direction can be ignored when calculating the actual gas storage space; and only the volumes of the spaces between the cell 30 and the case 40 in the length direction and the height direction of the cell 30 are calculated, namely the spaces at ①②③④ in FIG. 9. More specifically, the calculation method is: the space volume in the length direction of the cell 30 (namely the sum of the space volumes at ① and ② is obtained by multiplying the difference value between the length of an inner cavity of the case 40 and the length of the cell 30 by the width of the inner cavity of the case 40 and then by the thickness of the inner cavity of the case 40; and the space volume in the height direction of the cell 30 (namely the space volume in the width direction, which is also the sum of the space volumes at ③ and ④) is obtained by multiplying the difference between the width of the inner cavity of the case 40 and the width of the cell 30 by the length of the cell 30 and then by the thickness of the inner cavity of the case 40. The actual gas storage space is the sum of the space volume in the length direction of the cell 30 and the space volume in the width direction of the cell 30.

In the present application, the thickness of the inner cavity of the case 40 is also called the inner thickness of the case 40 for short (namely the distance from the inner wall of one side of the case 40 to the inner wall of the other side of the case 40 in the thickness direction), the width of the inner cavity of the case 40 is also called the inner width of the case 40 for short (namely the distance from the inner wall of one side of the case 40 to the inner wall of the other side of the case 40 in the width direction), and the length of the inner cavity of the case 40 is also called the inner length of the case 40 for short (namely the distance from the inner wall of one side of the case 40 to the inner wall of the other side of the case 40 in the length direction). In addition, the width of the cell 30 is replaced with the width of the negative electrode current collector (without the tabs), and the length of the cell 30 is replaced with the length of the negative electrode current collector (without the tabs); although the tabs occupy a certain space, the space volume occupied by the tabs is also ignored in the present application.

When calculating the actual gas storage space, the thickness direction can be ignored, only the space between the cell 30 and the case 40 in the length direction and the height direction is calculated, namely, spaces at ①②③④, further, other assemblies between the case 40 and the cell 30 are not included, such as supporting structures, these assemblies also occupy the volume, and the volume of other assemblies is subtracted from the actual gas storage space.

FIG. 7, FIG. 8, FIG. 9, and FIG. 10 show another lithium-ion battery structure of the present application, the length-width ratio of the lithium-ion battery is 3, and the lithium-ion battery also includes the case 40, the cell 30 and the electrolyte solution (not shown in the figure) which are located in the case 40; the negative electrode plate 20 in FIG. 7, the positive electrode plate 10 in FIG. 8, and the separator (not shown in the figure) are wound to form the cell 30, and the case 40 further includes the positive electrode terminal post 41, the negative electrode terminal post 42, and the explosion-proof valve 43. The positive electrode plate 10 and the negative electrode plate 20 are both of a square structure, and the square structures ignore the overall shape of the tabs. The positive electrode plate includes the positive electrode tabs 11, the positive electrode current collector, and the positive electrode active material layer; the positive electrode current collector is of a rectangular structure; and the positive electrode tabs 11 are arranged on one long edge of the positive electrode current collector, and a plurality of positive electrode tabs 11 are uniformly arranged on one positive electrode current collector. The negative electrode plate 20 includes the negative electrode tabs 21, the negative electrode current collector, and the negative electrode active material layer; the negative electrode current collector is of a rectangular structure; the negative electrode tabs 21 are arranged on one long side of the negative electrode current collector, and a plurality of negative electrode tabs 21 are uniformly arranged on one negative electrode current collector. The cell 30 is formed by laminating one positive electrode plate 10, one negative electrode plate 20 and the separator; the positive electrode tabs 11 and the negative electrode tabs 21 are arranged on the upper end of the cell 30; the positive electrode terminal post 41 is electrically connected to the positive electrode tabs 11; the negative electrode terminal post 42 is electrically connected to the negative electrode tabs 21; the positive electrode terminal post 41 and the negative electrode terminal post 42 are arranged at the upper end of the case 40; and the explosion-proof valve 43 is arranged between the positive electrode terminal post 41 and the negative electrode terminal post 42. FIG. 10 is a schematic diagram of an airflow direction. As shown in FIG. 9, in the thickness direction of the electrode plates, namely the thickness direction of the cell 30 (the thickness direction in the figure is the direction vertical to the plane of the view diagram, namely the direction vertical to Hd and Ld), the gap between the cell 30 and the case 40 is small, the cell 30 mainly expand in the thickness direction, so the gap between the cell 30 and the case 40 after cycle is further reduced, and therefore, the thickness direction can be ignored when calculating the actual gas storage space; and only the spaces between the cell 30 and the case 40 in the length direction and the height direction of the cell 30 are calculated, namely the spaces at ①②③④ in FIG. 9.

In order to further study the actual gas storage space for different lithium-ion battery systems prepared from various materials, the applicant designed a series of experiments according to the design experience on small-capacity lithium-ion batteries and previous explorations, with the experimental groups shown as follows:

### [Basic Group 1]

The Basic Group 1 includes 100 lithium-ion batteries, and the design purpose of the Basic Group 1 is to obtain the ratio of the capacity of the high-capacity cell to gas production. The originally added materials of the lithium-ion batteries in the Basic Group 1 and the structures of the lithium-ion batteries are as follows: the negative electrode active materials are carbon-coated graphite, the OI value of the graphite is 10, the graphitization degree is 92%, the Dv50 of the graphite is 15 µm, the Dv10 is 6 µm, the Dv90 is 26 µm, and the Dv99 is 42 µm; the graphite is non-agglomerated single particles, the surface density of the active material layers on one surface of the negative electrode plates is 0.11 mg/mm²; the compacted density of the active material layers on one surface of the negative electrode plates is 1.4 g/cc; the single-sided thickness of the negative electrode active material layers is 79 µm; the negative electrode current collectors are prepared from the copper foil, with the thickness of 6 µm; the negative electrode active material layers are arranged on both surfaces of the negative electrode current collectors; the negative electrode tabs are arranged at one end of the negative electrode plates in the length direction, namely on the short side, the negative electrode tabs and the negative electrode plates are of an integrated structure, the widths of the negative electrode plates are 120 mm, and the widths of the negative electrode tabs are 75 mm; and in the width direction of the negative electrode plates, the distance h3 from the upper ends of the negative electrode tabs to the upper ends of the negative electrode plates is 28 mm, and the distance h4 from the lower ends of the negative electrode tabs to the lower ends of the negative electrode plates is 17 mm; and a plurality of negative electrode plates are provided, the negative electrode tabs are arranged on the plurality of negative electrode plates, a plurality of negative electrode tabs are electrically connected to the negative electrode terminal posts on the second ends of the shells, and the explosion-proof valves are arranged at the first ends of the shells.

The positive electrode active materials are carbon-coated lithium iron phosphate (LFP), the compacted density of the active material layers on one surface of the positive electrode plates is 2.6 g/cc, the surface density of the active material layers on one surface of the positive electrode plates is 0.24 mg/mm², and the thickness of the active material layers on one surface of the positive electrode plates is 92 µm; the positive electrode tabs are arranged at one end of the positive electrode plates in the length direction, namely on the short edge; the positive electrode tabs and the positive electrode plates are of an integrated structure, the widths of the positive electrode plates are 116 mm, and the widths of the positive electrode tabs are 75 mm; the distance h1 from the upper ends of the positive electrode tabs to the upper ends of the positive electrode plates is 26 mm, and the distance h2 from the lower ends of the positive electrode tabs to the lower ends of the positive electrode plates is 15 mm; a plurality of positive electrode plates are provided, the positive electrode tabs are arranged on the plurality of positive electrode plates, and a plurality of positive electrode tabs are electrically connected to the positive electrode terminal posts on the second ends of the shells; the first upper exhaust channels are formed between the upper ends of the positive electrode tabs and the shells; the explosion-proof valves are arranged on the first ends of the shells and are located above the positive electrode terminal posts; in the airflow direction of the first upper exhaust channels, the overlap ratio of the explosion-proof valves and the first upper exhaust channels is 85%; and the average particle size of primary LFP particles of the positive electrode active materials is 0.1 to 5 µm (since the LFP particles are easy to agglomerate, their average particle size cannot be precisely measured, but since the gas production rate of the LFP is smaller than that of the ternary positive electrode materials, and after the LFP and graphite form the lithium-ion batteries, the gas production rate at the graphite location on the negative electrode is far greater than that at the LFP location on the positive electrode, so that the particle size of the LFP serving as the positive electrode materials is not limited in the present application).

The separators include PE base membranes on which aluminum oxide coatings are arranged, and the porosity of the separator is 40%.

Lithium salt of the electrolyte solution is LiPF₆, and accounts for 16% of the mass of the lithium salt; and the solvent of the electrolyte solution includes 30% by mass of EC, 13% by mass of DMC, 38% by mass of EMC, and 8% by mass of DEC.

The cell structures are the stacked structures, the capacity of the lithium-ion batteries is designed to be 300 Ah, and the gas storage spaces of the lithium-ion batteries in the Basic Group 1 are 1,500 cm³; the gas storage spaces of the lithium-ion batteries in the Basic Group 1 are designed to be much greater than required for several considerations as follows: on one hand, it ensures that when testing each basic group, the explosion-proof valves are not switched on after reaching 3,000 cycles, thus the relationship between the capacity of lithium-ion batteries and the gas production rate in different basic groups can be calculated; and on the other hand, the gas storage spaces of the lithium-ion batteries in the Basic Group 1 facilitates are large, which facilitates the placement of gas pressure sensors in the cases.

After being filled with the solution, the lithium-ion batteries will be subjected to formation and vacuuming processes.

The pressure for forcing open the explosion-proof valves is 0.6 MPa.

The cases of the lithium-ion batteries are prepared from aluminum alloy, and the gas pressure sensors are arranged inside the cases.

The 100 lithium-ion batteries in the Basic Group 1 are subjected to charge-discharge cycle, the external environment temperature of the lithium-ion batteries is 40°C, and the charging and discharging cut-off voltage is 2.5-3.65 V; the charging process includes a constant current section and a constant voltage section; in the constant current section, the lithium-ion batteries are firstly charged to the cut-off voltage (3.65 V) at the constant current rate of 1 C, and in the constant voltage section, the constant voltage charging is carried out; during the discharging process, the lithium-ion batteries are discharged to reach the discharging cut-off voltage (2.5 V) at the rate of 1 C. After the basic group is subjected to charging and discharging circulation for 50 circles, 5 lithium-ion batteries are taken and disassembled for analyzing the change of each ingredient of the lithium-ion batteries, and the rest 95 lithium-ion batteries are continuously circulated to 3,000 cycles. The analysis on the 5 lithium-ion batteries shows that most of the positive and negative electrode materials and positive and negative electrode plates do not have great change, the compacted density and the thickness of the negative electrode plate change, the measured compacted density of the active material layer on one surface of the negative electrode plate is 1.35 g/cc, and the thickness of the active material layer on one surface of the negative electrode plate is 85 µm; the compacted density and the thickness of the active material layer on one surface of the positive electrode plate have a little change; and by measurement, the compacted density of the active material layer on one surface the positive electrode plate is 2.59 g/cc, and the thickness of the active material layer on one surface of the positive electrode plate is 93 µm.

After the rest 95 lithium-ion batteries are circulated for 3,000 cycles, the explosion-proof valves are not forced open; after the lithium-ion batteries are circulated for 3,000 cycles, the gas pressure P of the gas pressure sensor in each lithium-ion battery is recorded (the gas pressure P of different lithium-ion batteries may be different); according to PV=NRT, T is 40°C, R is 8.314, V is 1,500 cm³, and the unit of the gas pressure P is Mpa, the corresponding gas production rate N of each lithium-ion battery is obtained, and 95 data are summarized; and when the capacity L of the lithium-ion batteries is 300 Ah, the ratio N/L of the gas production rate N of the lithium-ion batteries to the capacity of the lithium-ion batteries is 0.02554-0.03495mmol/Ah (millimole per ampere-hour).

Further, according to Pv=NRT, when the fixed gas pressure P is 0.35 Mpa, the ratio of the gas storage space v to the capacity L of the lithium-ion batteries is obtained: v/L=NRT/PL; T is 40°C, R is 8.314, and N/L is 0.02554-0.03495mmol/Ah (millimole per ampere-hour), so that 0.19cm³/Ah≤v/L≤0.26cm³/Ah, i.e., 0.19L≤v≤0.26L, and the unit of v is cubic centimeter (cm³).

### [Adjusted Group 1]

Based on the Basic Group 1, the Adjusted Group 1 is established; and the design concept of the Adjusted Group 1 is to design a series of lithium-ion batteries with graphite of different OI values based on the Basic Group 1, while keeping other characteristics the same as the Basic Group 1.

After 3,000 cycles, the ratio of the gas production rate to the capacity of the series of lithium-ion batteries is obtained, and it is found that when the OI value of graphite is 3, the average value of the ratio of the gas production rate to the capacity of the corresponding plurality of lithium-ion batteries in the Adjusted Group 1 is close to the upper limit (0.03495 mmol/Ah) of the Basic Group 1; when the OI value of graphite is less than 3, the average value of the ratio of the gas production rate to the capacity of the corresponding plurality of lithium-ion batteries in the Adjusted Group 1 exceeds the upper limit (0.03495 mmol/Ah) of the Basic Group 1; it is found that when the OI value of graphite is greater than 3 and less than or equal to 30 (for cost consideration, the condition that the OI value is greater than 30 is not verified in the present application, but it is speculated that the higher the graphite OI value is, the better the rapid charging performance is, and the less the gas production rate is), the average value of the ratio of the gas production rate to the capacity of the corresponding plurality of lithium-ion batteries in the Adjusted Group 1 is less than the upper limit (0.03495 mmol/Ah) of the Basic Group 1.

### [Secondary Adjusted Group 1]

Based on the Adjusted Group 1, a Secondary Adjusted Group 1 is further established. The Secondary Adjusted Group 1 is different from the Adjusted Group 1 in that the charge rate is 2 C.

It is found that when the OI value of graphite is 10, the average value of the ratio of the gas production rate to the capacity of the corresponding plurality of lithium-ion batteries in the Secondary Adjusted Group 1 is close to the upper limit (0.03495 mmol/Ah) of the Basic Group 1; when the OI value of graphite is less than 10, the average value of the ratio of the gas production rate to the capacity of the corresponding plurality of lithium-ion batteries in the Secondary Adjusted Group 1 exceeds the upper limit (0.03495 mmol/Ah) of the Basic Group 1; and it is found that when the OI value of graphite is greater than 10 and less than or equal to 30, the average value of the ratio of the gas production rate to the capacity of the corresponding plurality of lithium-ion batteries in the Secondary Adjusted Group 1 is less than the upper limit (0.03495 mmol/Ah) of the Basic Group 1.

### [Third Adjusted Group 1]

Based on the Adjusted Group 1, the Third Adjusted Group 1 is further established; and the Third Adjusted Group 1 is different from the Adjusted Group 1 in that the charge rate is 3 C.

It is found that when the OI value of graphite is 15, the average value of the ratio of the gas production rate to the capacity of the corresponding plurality of lithium-ion batteries in the Third Adjusted Group 1 is close to the upper limit (0.03495 mmol/Ah) of the Basic Group 1; when the OI value of graphite is less than 15, the average value of the ratio of the gas production rate to the capacity of the corresponding plurality of lithium-ion batteries in the Third Adjusted Group 1 exceeds the upper limit (0.03495 mmol/Ah) of the Basic Group 1; and it is found that when the OI value of graphite is greater than 15 and less than or equal to 30, the average value of the ratio of the gas production rate to the capacity of the corresponding plurality of lithium-ion batteries in the Third Adjusted Group 1 is less than the upper limit (0.03495 mmol/Ah) of the Basic Group 1.

Therefore, based on the results of the Basic Group 1, the Adjusted Group 1, the Secondary Adjusted Group 1, and the Third Adjusted Group 1, it can be concluded that when the cell needs to have high-rate charging capability, for a rate of 2 C or above, the OI value of graphite can be designed to be 10-30, and for a rate of 3 C or above, the OI value of graphite can be designed to be 15-30.

### [Adjusted Group 2]

Based on the Basic Group 1, the Adjusted Group 2 is established; and the design concept of the Adjusted Group 2 is to design a series of lithium-ion batteries with graphite of different graphitization degrees based on the Basic Group 1, while keeping other characteristics the same as the Basic Group 1.

After 3,000 cycles, the ratio of the gas production rate to the capacity of the series of lithium-ion batteries is obtained. It is found that when the graphitization degree of graphite is 90%, the average value of the ratio of the gas production rate to the capacity of the corresponding plurality of lithium-ion batteries in the Adjusted Group 2 is close to the upper limit (0.03495 mmol/Ah) of the Basic Group 1; when the graphitization degree of graphite is less than 90%, the average value of the ratio of the gas production rate to the capacity of the corresponding plurality of lithium-ion batteries in the Adjusted Group 2 exceeds the upper limit (0.03495 mmol/Ah) of the Basic Group 1; and when the graphitization degree of graphite is greater than 90 and less than or equal to 95 (for cost consideration, the condition that the graphitization degree is greater than 95 is not verified in the present application, but it is speculated that the higher the graphite graphitization degree is, the better the rapid charging performance is, and the less the gas production rate is), the average value of the ratio of the gas production rate to the capacity of the corresponding plurality of lithium-ion batteries in the Adjusted Group 2 is less than the upper limit (0.03495 mmol/Ah) of the Basic Group 1.

### [Secondary Adjusted Group 2]

Based on the Basic Group 2, the Secondary Adjusted Group 2 is established; and the design concept of the Secondary Adjusted Group 2 is to set the charge rate to be 2 C based on the Basic Group 2, while keeping other characteristics the same as the Basic Group 2.

After 3,000 cycles, the ratio of the gas production rate to the capacity of the series of lithium-ion batteries is obtained. It is found that when the graphitization degree of graphite is 91%, the average value of the ratio of the gas production rate to the capacity of the corresponding plurality of lithium-ion batteries in the Secondary Adjusted Group 2 is close to the upper limit (0.03495 mmol/Ah) of the Basic Group 1; and when the graphitization degree of graphite is less than 91%, the average value of the ratio of the gas production rate to the capacity of the corresponding plurality of lithium-ion batteries in the Secondary Adjusted Group 2 exceeds the upper limit (0.03495 mmol/Ah) of the Basic Group 1.

### [Adjusted Group 3]

Based on the Basic Group 1, the Adjusted Group 3 is established; and the design concept of the Adjusted Group 3 is to design a series of lithium-ion batteries with graphite of different Dv50 based on the Basic Group 1, while keeping other characteristics the same as the Basic Group 1.

After 3,000 cycles, the ratio of the gas production rate to the capacity of the series of lithium-ion batteries is obtained. It is found that when the Dv50 of graphite is 10 µm, the average value of the ratio of the gas production rate to the capacity of the corresponding plurality of lithium-ion batteries in the Adjusted Group 3 is close to the upper limit (0.03495 mmol/Ah) of the Basic Group 1; when the Dv50 of graphite is less than 10 µm, the average value of the ratio of the gas production rate to the capacity of the corresponding plurality of lithium-ion batteries in the Adjusted Group 3 exceeds the upper limit (0.03495 mmol/Ah) of the Basic Group 1; when the Dv50 of graphite is 30 µm, the average value of the ratio of the gas production rate to the capacity of the corresponding plurality of lithium-ion batteries in the Adjusted Group 3 is close to the upper limit (0.03495 mmol/Ah) of the Basic Group 1; when the Dv50 of graphite is greater than 30 µm, the average value of the ratio of the gas production rate to the capacity of the corresponding plurality of lithium-ion batteries in the Adjusted Group 3 exceeds the upper limit (0.03495 mmol/Ah) of the Basic Group 1; and when the Dv50 of graphite is 10-30 µm, the average value of the ratio of the gas production rate to the capacity of the corresponding plurality of lithium-ion batteries in the Adjusted Group 3 is less than the upper limit (0.03495 mmol/Ah) of the Basic Group 1.

### [Secondary Adjusted Group 3]

Based on the Adjusted Group 3, the Secondary Adjusted Group 3 is established; and the Secondary Adjusted Group 3 is different from the Adjusted Group 3 in that the charge rate is 2 C.

It is found that when the Dv50 of graphite is 20 µm, the average value of the ratio of the gas production rate to the capacity of the corresponding plurality of lithium-ion batteries in the Secondary Adjusted Group 3 is close to the upper limit (0.03495 mmol/Ah) of the Basic Group 1; when the Dv50 of graphite is greater than 20 µm, the average value of the ratio of the gas production rate to the capacity of the corresponding plurality of lithium-ion batteries in the Secondary Adjusted Group 3 exceeds the upper limit (0.03495 mmol/Ah) of the Basic Group 1; and when the Dv50 of graphite is 10-20 µm, the average value of the ratio of the gas production rate to the capacity of the corresponding plurality of lithium-ion batteries in the Secondary Adjusted Group 3 is less than the upper limit (0.03495 mmol/Ah) of the Basic Group 1.

### [Third Adjusted Group 3]

Based on the Adjusted Group 3, the Third Adjusted Group 3 is established; and the Third Adjusted Group 3 is different from the Adjusted Group 3 in that the graphite is the carbon-coated secondary graphite particles.

It is found that when the Dv50 of carbon-coated secondary graphite particles is 30 µm, the average value of the ratio of the gas production rate to the capacity of the corresponding plurality of lithium-ion batteries in the Third Adjusted Group 3 is close to the upper limit (0.03495 mmol/Ah) of the Basic Group 1; when the Dv50 of carbon-coated secondary graphite particles is greater than 30 µm, the average value of the ratio of the gas production rate to the capacity of the corresponding plurality of lithium-ion batteries in the Third Adjusted Group 3 exceeds the upper limit (0.03495 mmol/Ah) of the Basic Group 1; and when the Dv50 of carbon-coated secondary graphite particles is 10-30 µm, the average value of the ratio of the gas production rate to the capacity of the corresponding plurality of lithium-ion batteries in the Third Adjusted Group 3 is less than the upper limit (0.03495 mmol/Ah) of the Basic Group 1.

### [Fourth Adjusted Group 3]

Based on the Basic Group 1, the Fourth Adjusted Group 3 is established; and the design concept of the Fourth Adjusted Group 3 is to design a series of lithium-ion batteries with graphite of different Dv10 based on the Basic Group 1, while keeping other characteristics the same as the Basic Group 1.

After 3,000 cycles, the ratio of the gas production rate to the capacity of the series of lithium-ion batteries is obtained; and it is found that when the Dv10 of graphite is 3 µm, the average value of the ratio of the gas production rate to the capacity of the corresponding plurality of lithium-ion batteries in the Fourth Adjusted Group 3 is close to the upper limit (0.03495 mmol/Ah) of the Basic Group 1; and when the Dv10 of graphite is less than 3 µm, the average value of the ratio of the gas production rate to the capacity of the corresponding plurality of lithium-ion batteries in the Fourth Adjusted Group 3 exceeds the upper limit (0.03495 mmol/Ah) of the Basic Group 1.

### [Fifth Adjusted Group 3]

Based on the Basic Group 1, the Fifth Adjusted Group 3 is established; and the design concept of the Fifth Adjusted Group 3 is to design a series of lithium-ion batteries with graphite of different Dv90 based on the Basic Group 1, while keeping other characteristics the same as the Basic Group 1.

After 3,000 cycles, the ratio of the gas production rate to the capacity of the series of lithium-ion batteries is obtained; and it is found that when the Dv90 of graphite is 40 µm, the average value of the ratio of the gas production rate to the capacity of the corresponding plurality of lithium-ion batteries in the Fifth Adjusted Group 3 is close to the upper limit (0.03495 mmol/Ah) of the Basic Group 1; and when the Dv90 of graphite is less than 40 µm, the average value of the ratio of the gas production rate to the capacity of the corresponding plurality of lithium-ion batteries in the Fifth Adjusted Group 3 exceeds the upper limit (0.03495 mmol/Ah) of the Basic Group 1.

### [Sixth Adjusted Group 3]

Based on the Basic Group 1, the Sixth Adjusted Group 3 is established; and the design concept of the Sixth Adjusted Group 3 is to design a series of lithium-ion batteries with graphite of different Dv99 based on the Basic Group 1, while keeping other characteristics the same as the Basic Group 1.

After 3,000 cycles, the ratio of the gas production rate to the capacity of the series of lithium-ion batteries is obtained; and it is found that when the Dv99 of graphite is 49 µm, the average value of the ratio of the gas production rate to the capacity of the corresponding plurality of lithium-ion batteries in the Sixth Adjusted Group 3 is close to the upper limit (0.03495 mmol/Ah) of the Basic Group 1; and when the Dv99 of graphite is less than 49 µm, the average value of the ratio of the gas production rate to the capacity of the corresponding plurality of lithium-ion batteries in the Sixth Adjusted Group 3 exceeds the upper limit (0.03495 mmol/Ah) of the Basic Group 1.

### [Adjusted Group 4]

Based on the Basic Group 1, the Adjusted Group 4 is established; and the design concept of the Adjusted Group 4 is to design a series of lithium-ion batteries having negative electrode plates with different surface densities based on the Basic Group 1, while keeping other characteristics the same as the Basic Group 1.

After 3,000 cycles, the ratio of the gas production rate to the capacity of the series of lithium-ion batteries is obtained; it is found that when the surface density of the active material layer on one surface of the negative electrode plate is 0.13 mg/mm², the average value of the ratio of the gas production rate to the capacity of the corresponding plurality of lithium-ion batteries in the Adjusted Group 4 is close to the upper limit (0.03495 mmol/Ah) of the Basic Group 1; when the surface density of the active material layer on one surface of the negative electrode plate is greater than 0.13 mg/mm², the average value of the ratio of the gas production rate to the capacity of the corresponding plurality of lithium-ion batteries in the Adjusted Group 4 exceeds the upper limit (0.03495 mmol/Ah) of the Basic Group 1; when the surface density of the active material layer on one surface of the negative electrode plate is 0.07mg/mm²-0.13mg/mm², the average value of the ratio of the gas production rate to the capacity of the corresponding plurality of lithium-ion batteries in the Adjusted Group 4 is less than the upper limit (0.03495 mmol/Ah) of the Basic Group 1; furthermore, when the surface density of the active material layer on one surface of the negative electrode plate is less than 0.07 mg/mm², the overall negative electrode plate has relatively few active materials due to the presence of the negative electrode current collector; especially for high-capacity cells more than 200 Ah, more negative electrode plates are needed to achieve large capacity; thus, for the high-capacity cells, the volume proportion of the current collector increases; and based on the prior practice, in some embodiments of the present application, the surface density of the active material layer on one surface of the negative electrode plate is specified to be not less than 0.07 mg/mm².

### [Adjusted Group 5]

Based on the Basic Group 1, the Adjusted Group 5 is established; and the design concept of the Adjusted Group 5 is to design a series of lithium-ion batteries composed of negative electrode plate with different compacted density after rolling process based on the Basic Group 1, while keeping other characteristics the same as the Basic Group 1.

After 3,000 cycles, the ratio of the gas production rate to the capacity of the series of lithium-ion batteries is obtained; it is found that when the compacted density of the active material layer on one surface of the rolled negative electrode plate is 1.74 g/cc, the average value of the ratio of the gas production rate to the capacity of the corresponding plurality of lithium-ion batteries in the Adjusted Group 5 is close to the upper limit (0.03495 mmol/Ah) of the Basic Group 1; when the compacted density of the active material layer on one surface of the rolled negative electrode plate is greater than 1.74 g/cc, the average value of the ratio of the gas production rate to the capacity of the corresponding plurality of lithium-ion batteries in the Adjusted Group 5 exceeds the upper limit (0.03495 mmol/Ah) of the Basic Group 1; when the compacted density of the active material layer on one surface of the rolled negative electrode plate is 1.32-1.74g/cc, the average value of the ratio of the gas production rate to the capacity of the corresponding plurality of lithium-ion batteries in the Adjusted Group 5 is less than the upper limit (0.03495 mmol/Ah) of the Basic Group 1; furthermore, when the compacted density of the active material layer on one surface of the rolled negative electrode plate is less than 1.32 g/cc, the overall negative electrode plate has relatively high mass proportion according to the setting principle similar to the surface density; especially for high-capacity cells more than 200 Ah, more negative electrode plates are needed to achieve large capacity; thus, for the high-capacity cells, the mass proportion of the current collector increases; and based on the prior practice, the compacted density of the active material layer on one surface of the rolled negative electrode plate is specified to be not less than 1.32 g/cc in the present application. In the Adjusted Group 5, after 50 circles, the plurality of lithium-ion batteries with the compacted density of the active material layer on one surface of the rolled negative electrode plate of 1.74 g/cc are disassembled, and it is found that the compacted density of the active material layer on one surface of the rolled negative electrode plate is 1.7 g/cc; and after 50 circles, the plurality of lithium-ion batteries with the compacted density of the active material layer on one surface of the rolled negative electrode plate of 1.32 g/cc are disassembled, and it is found that the compacted density of the active material layer on one surface of the rolled negative electrode plate is 1.3 g/cc.

### [Adjusted Group 6]

Based on the Basic Group 1, the Adjusted Group 6 is established; and the design concept of the Adjusted Group 6 is to design a series of lithium-ion batteries composed of positive electrode plates with different surface densities after rolling process based on the Basic Group 1, while keeping other characteristics the same as the Basic Group 1.

After 3,000 cycles, the ratio of the gas production rate to the capacity of the series of lithium-ion batteries is obtained; it is found that when the surface density of the active material layer on one surface of the rolled positive electrode plate is 0.26 mg/mm², the average value of the ratio of the gas production rate to the capacity of the corresponding plurality of lithium-ion batteries in the Adjusted Group 6 is close to the upper limit (0.03495 mmol/Ah) of the Basic Group 1; when the surface density of the active material layer on one surface of the rolled positive electrode plate is greater than 0.26 mg/mm², the average value of the ratio of the gas production rate to the capacity of the corresponding plurality of lithium-ion batteries in the Adjusted Group 6 exceeds the upper limit (0.03495 mmol/Ah) of the Basic Group 1; when the surface density of the active material layer on one surface of the rolled negative electrode plate is 0.16mg/mm²-0.26mg/mm², the average value of the ratio of the gas production rate to the capacity of the corresponding plurality of lithium-ion batteries in the Adjusted Group 6 is less than the upper limit (0.03495 mmol/Ah) of the Basic Group 1; furthermore, when the surface density of the active material layer on one surface of the positive electrode plate is less than 0.16 mg/mm², the overall negative electrode plate has relatively few active materials due to the presence of positive electrode current collector; especially for high-capacity cells more than 200 Ah, more negative electrode plates are needed to achieve large capacity; thus, for the high-capacity cells, the volume proportion of the current collector increases; and based on the prior practice, the surface density of the active material layer on one surface of the positive electrode plate is specified to be not less than 0.16 mg/mm² in the present application.

### [Adjusted Group 7]

Based on the Basic Group 1, the Adjusted Group 7 is established; and the design concept of the Adjusted Group 7 is to design a series of lithium-ion batteries composed of positive electrode plate with different compacted density after rolling process based on the Basic Group 1, while keeping other characteristics the same as the Basic Group 1.

After 3,000 cycles, the ratio of the gas production rate to the capacity of the series of lithium-ion batteries is obtained; it is found that when the compacted density of the active material layer on one surface of the rolled positive electrode plate is 2.71 g/cc, the average value of the ratio of the gas production rate to the capacity of the corresponding plurality of lithium-ion batteries in the Adjusted Group 7 is close to the upper limit (0.03495 mmol/Ah) of the Basic Group 1; when the compacted density of the active material layer on one surface of the rolled positive electrode plate is greater than 2.71 g/cc, the average value of the ratio of the gas production rate to the capacity of the corresponding plurality of lithium-ion batteries in the Adjusted Group 7 exceeds the upper limit (0.03495 mmol/Ah) of the Basic Group 1; when the compacted density of the active material layer on one surface of the rolled positive electrode plate is 2.3-2.71 g/cc, the average value of the ratio of the gas production rate to the capacity of the corresponding plurality of lithium-ion batteries in the Adjusted Group 7 is less than the upper limit (0.03495 mmol/Ah) of the Basic Group 1; furthermore, when the compacted density of the active material layer on one surface of the rolled positive electrode plate is less than 2.3 g/cc, the mass proportion of positive electrode current collector in the overall positive electrode plate is relatively high according to the setting principle similar to the surface density; especially for high-capacity cells more than 200 Ah, more negative electrode plates are needed to achieve large capacity; thus, for the high-capacity cells, the mass proportion of the current collector increases; and based on the prior practice, the compacted density of the active material layer on one surface of the rolled positive electrode plate is specified to be not less than 2.3 g/cc in the present application. In the Adjusted Group 7, after 50 circles, the plurality of lithium-ion batteries with the compacted density of the active material layer on one surface of the rolled positive electrode plate of 2.71 g/cc are disassembled, and it is found that the compacted density of the active material layer on one surface of the negative electrode plate is 2.7 g/cc; and after 50 circles, the plurality of lithium-ion batteries with the compacted density of the active material layer on one surface of the rolled positive electrode plate of 1.3 g/cc are disassembled, and it is found that the compacted density of the active material layer on one surface of the positive electrode plate is 1.3 g/cc; and when the compacted density is low, the compacted density of the positive electrode plate changes almost negligibly.

### [Adjusted Group 8]

Based on the Basic Group 1, the Adjusted Group 8 is established; and the design concept of the Adjusted Group 8 is to design a series of lithium-ion batteries composed of separator with different separator porosity based on the Basic Group 1, while keeping other characteristics the same as the Basic Group 1.

After 3,000 cycles, the ratio of the gas production rate to the capacity of the series of lithium-ion batteries is obtained; it is found that when the separator porosity is 50%, the average value of the ratio of the gas production rate to the capacity of the corresponding plurality of lithium-ion batteries in the Adjusted Group 8 is close to the upper limit (0.03495 mmol/Ah) of the Basic Group 1; when the separator porosity is greater than 50%, the average value of the ratio of the gas production rate to the capacity of the corresponding plurality of lithium-ion batteries in the Adjusted Group 8 exceeds the upper limit (0.03495 mmol/Ah) of the Basic Group 1; when the separator porosity is 30%, the average value of the ratio of the gas production rate to the capacity of the corresponding plurality of lithium-ion batteries in the Adjusted Group 8 is close to the upper limit (0.03495 mmol/Ah) of the Basic Group 1; when the separator porosity is less than 30%, the average value of the ratio of the gas production rate to the capacity of the corresponding plurality of lithium-ion batteries in the Adjusted Group 8 exceeds the upper limit (0.03495 mmol/Ah) of the Basic Group 1; when the separator porosity is 30%-50%, the average value of the ratio of the gas production rate to the capacity of the corresponding plurality of lithium-ion batteries in the Adjusted Group 8 is less than the upper limit (0.03495 mmol/Ah) of the Basic Group 1; based on the Basic Group 1, a Secondary Adjusted Group 8 is established; and the Secondary Adjusted Group 8 is different from the Basic Group 1 in that the width of the negative electrode plate is 200 mm (correspondingly, the width of the cell, the width of the cell, the widths of the negative electrode tabs, and the widths of the positive electrode tabs are different), a series of lithium-ion batteries composed of negative electrode plates with different widths are designed; after 3,000 cycles, the ratio of the gas production rate to the capacity of the series of lithium-ion batteries is obtained; and it is found that when the width of the negative electrode plate is 250 mm, the average value of the ratio of the gas production rate to the capacity of the corresponding plurality of lithium-ion batteries in the Secondary Adjusted Group 8 is close to the upper limit (0.03495 mmol/Ah) of the Basic Group 1; when the width of the negative electrode plate is greater than 250 mm, the average value of the ratio of the gas production rate to the capacity of the corresponding plurality of lithium-ion batteries in the Secondary Adjusted Group 8 exceeds the upper limit (0.03495 mmol/Ah) of the Basic Group 1; when the width of the negative electrode plate is 100-250 mm (for the high-capacity cells, it is generally designed as that the width of the negative electrode plate is greater than 100 mm, it is because the condition that the width is less than 100 mm is not verified in the present application), the average value of the ratio of the gas production rate to the capacity of the corresponding plurality of lithium-ion batteries in the Secondary Adjusted Group 8 is less than the upper limit (0.03495 mmol/Ah) of the Basic Group 1; based on the Basic Group 1, a Third Adjusted Group 8 is established; and the Third Adjusted Group 8 is different from the Basic Group 1 in that the width of the negative electrode plate is 200 mm (correspondingly, the width of the cell, the width of the cell, the widths of the negative electrode tabs, and the widths of the positive electrode tabs are different), a series of lithium-ion batteries composed of separator with different porosity are designed; after 3,000 cycles, the ratio of the gas production rate to the capacity of the series of lithium-ion batteries is obtained; and it is found that when separator porosity is 35%, the average value of the ratio of the gas production rate to the capacity of the corresponding plurality of lithium-ion batteries in the Third Adjusted Group 8 is close to the upper limit (0.03495 mmol/Ah) of the Basic Group 1; when separator porosity is less than 35%, the average value of the ratio of the gas production rate to the capacity of the corresponding plurality of lithium-ion batteries in the Third Adjusted Group 8 exceeds the upper limit (0.03495 mmol/Ah) of the Basic Group 1; when separator porosity is 35%-50%, the average value of the ratio of the gas production rate to the capacity of the corresponding plurality of lithium-ion batteries in the Third Adjusted Group 8 is less than the upper limit (0.03495 mmol/Ah) of the Basic Group 1; based on the Basic Group 1, a Fourth Adjusted Group 8 is established; and the Fourth Adjusted Group 8 is different from the Basic Group 1 in that the width of the negative electrode plate is 150 mm (correspondingly, the width of the cell, the width of the cell, the widths of the negative electrode tabs, and the widths of the positive electrode tabs are different), a series of lithium-ion batteries composed of separator with different porosity are designed; after 3,000 cycles, the ratio of the gas production rate to the capacity of the series of lithium-ion batteries is obtained; and it is found that when separator porosity is 30%, the average value of the ratio of the gas production rate to the capacity of the corresponding plurality of lithium-ion batteries in the Fourth Adjusted Group 8 is close to the upper limit (0.03495 mmol/Ah) of the Basic Group 1; when separator porosity is less than 30%, the average value of the ratio of the gas production rate to the capacity of the corresponding plurality of lithium-ion batteries in the Fourth Adjusted Group 8 exceeds the upper limit (0.03495 mmol/Ah) of the Basic Group 1; and when separator porosity is 30%-50%, the average value of the ratio of the gas production rate to the capacity of the corresponding plurality of lithium-ion batteries in the Fourth Adjusted Group 8 is less than the upper limit (0.03495 mmol/Ah) of the Basic Group 1.

### [Adjusted Group 9]

Based on the Basic Group 1, the Adjusted Group 9 is established; and the design concept of the Adjusted Group 9 is to design a series of lithium-ion batteries composed of electrolyte solution with different DMC contents based on the Basic Group 1. The DMC content refers to the difference value obtained by dividing the mass of DMC by the mass of the electrolyte solution and the mass of lithium salt. The DMC content changes, and correspondingly, the proportion of EC, DMC, EMC, DEC and other electrolyte solution solvents can be changed; however, according to experience and experiment grope of the inventor, the EC content needs to be 30%-40%, and the difference value obtained by dividing the sum of the mass of EMC and DMC by the mass of the electrolyte solution and the mass of lithium salt is 50%-60% (under this content, due to other additives in the electrolyte solution, under some conditions, the difference value obtained by dividing the sum of the mass of EC, EMC and DMC by the mass of the electrolyte solution and the mass of lithium salt may be less than 100%). Because the DMC content is high, the viscosity of the electrolyte solutions can be reduced, thus gas production can be reduced and rapid charging can be achieved; however, DMC will produce a large amount of gas during the charge-discharge process of the lithium-ion battery, and for the lithium-ion battery in the present application, it is needed to control the DMC within a range.

After 3,000 cycles, the ratio of the gas production rate to the capacity of the series of lithium-ion batteries is obtained; and it is found that when the DMC content is 10%, the average value of the ratio of the gas production rate to the capacity of the corresponding plurality of lithium-ion batteries in the Adjusted Group 9 is close to the upper limit (0.03495 mmol/Ah) of the Basic Group 1; when the DMC content is less than 10%, the average value of the ratio of the gas production rate to the capacity of the corresponding plurality of lithium-ion batteries in the Adjusted Group 9 exceeds the upper limit (0.03495 mmol/Ah) of the Basic Group 1; when the DMC content is 15%, the average value of the ratio of the gas production rate to the capacity of the corresponding plurality of lithium-ion batteries in the Adjusted Group 9 is close to the upper limit (0.03495 mmol/Ah) of the Basic Group 1; when the DMC content is greater than 15%, the average value of the ratio of the gas production rate to the capacity of the corresponding plurality of lithium-ion batteries in the Adjusted Group 9 exceeds the upper limit (0.03495 mmol/Ah) of the Basic Group 1; and when the DMC content is 10%-15%, the average value of the ratio of the gas production rate to the capacity of the corresponding plurality of lithium-ion batteries in the Adjusted Group 9 is less than the upper limit (0.03495 mmol/Ah) of the Basic Group 1.

### [Adjusted Group 10]

Based on the Basic Group 1, the Adjusted Group 10 is established; and the design concept of the Adjusted Group 10 is to design a series of lithium-ion batteries composed of electrolyte solution with different carboxylate ester contents based on the Basic Group 1. The carboxylic ester content is obtained by dividing the difference value of the mass of the carboxylic ester by the mass of electrolyte solution and the mass of lithium salt. The carboxylic ester is beneficial to film formation at the negative electrode during the charge-discharge process of the lithium-ion battery, thus the ionic conductivity can improved, rapid charging is facilitated, and gas production at the interface of the negative electrode can reduced; but excessive carboxylic ester content will lead to increase in the gas production rate, and particularly in a rapid charging system, the carboxylic ester content needs to be within a certain range.

After 3,000 cycles, the ratio of the gas production rate to the capacity of the series of lithium-ion batteries is obtained; and it is found that when the carboxylic ester content is less than 10%, the average value of the ratio of the gas production rate to the capacity of the corresponding plurality of lithium-ion batteries in the Adjusted Group 10 is less than the upper limit (0.03495 mmol/Ah) of the Basic Group 1; when the carboxylic ester content is 10%, the average value of the ratio of the gas production rate to the capacity of the corresponding plurality of lithium-ion batteries in the Adjusted Group 10 is close to the upper limit (0.03495 mmol/Ah) of the Basic Group 1; when the carboxylic ester content is greater than 10%, the average value of the ratio of the gas production rate to the capacity of the corresponding plurality of lithium-ion batteries in the Adjusted Group 10 exceeds the upper limit (0.03495 mmol/Ah) of the Basic Group 1.

### [Adjusted Group 11]

Based on the Basic Group 1, the Adjusted Group 11 is established and only contains 10 lithium-ion batteries; the Adjusted Group 11 is different from the Basic Group 1 in the charging method; in a constant current section, charging is no longer done at a fixed constant current, but rather with distributed alternative high and low currents; the specific method includes: charging at a rate of 1 C for 2 min, then charging at 0.2 C for 0.5 min, then charging at 1 C for 2 min; alternatively repeating until reaching charging cut-off voltage; and then charging at constant voltage charging.

The way of charging at distributed alternative high and low currents is adopted, after 3,000 cycles, the gas production rate of each lithium-ion battery in the Adjusted Group 11 is reduced compared with that of the corresponding lithium-ion battery in the Basic Group 1, and other conditions are the same as those of the Basic Group 1.

### [Adjusted Group 12]

Based on the Basic Group 1, the Adjusted Group 12 is established and only contains 10 lithium-ion batteries; the Adjusted Group 12 is different from the Basic Group 1 in the charging method; in the constant current section, charging is no longer done at a fixed constant current, but rather with distributed alternative high and low currents; the specific method includes: charging at a rate of 1 C for 2 min, then charging at 0.2 C for 0.5 min, then charging at 0.8 C for 2 min, and charging at 0.2 C for 0.5 min; gradually reducing the current value of high current by this way until reaching charging cut-off voltage; and then charging at constant voltage charging.

The way of charging at distributed alternative high and low currents is adopted, after 3,000 cycles, the gas production rate of each lithium-ion battery in the Adjusted Group 12 is reduced compared with that of the corresponding lithium-ion battery in the Basic Group 1, and other conditions are the same as those of the Basic Group 1.

### [Adjusted Group 13]

Based on the Basic Group 1, the Adjusted Group 13 is established and only contains 10 lithium-ion batteries; the Adjusted Group 13 is different from the Basic Group 1 in the charging method; in the constant current section, charging is no longer done at a fixed constant current, but rather with distributed alternative high and low currents; the specific method includes: charging at a rate of 1 C for 2 min, then stop charging for 0.1 min, then charging at 1 C for 2 min; alternatively repeating until reaching charging cut-off voltage; and then charging at constant voltage charging.

It is found that the way of charging at distributed alternative high and low currents is adopted, after 3,000 cycles, the gas production rate of each lithium-ion battery in the Adjusted Group 13 is reduced compared with that of the corresponding lithium-ion battery in the Basic Group 1, and other conditions are the same as those of the Basic Group 1.

Based on the Adjusted Group 11, the Adjusted Group 12, and the Adjusted Group 13, it is further summarized to obtain a charging method for reducing gas production, which includes a constant-current charging section and a constant-voltage charging section; in the constant-current charging section, it includes the following charging processes: charging for first time by a first current, charging for second time by a second current, charging for third time by a third current, and charging for fourth time by a fourth current; the first current is greater than the second current; the first time is greater than the second time; the third current is not greater than the first current; the third time is greater than the second time; the fourth current is smaller than the third current; the fourth time is smaller than the third time; the second current can be 0; and the second current is further preferably equal to the fourth current.

### [Basic Group 2 to Basic Group 12]

Based on the Basic Group 1, the Basic Group 2 is established and is different from the Basic Group 1 in that the capacity of the lithium-ion batteries is adjusted to be 100 Ah by reducing the number of the positive and negative electrode plates, other conditions are the same, and finally after 3,000 cycles, the ratio of the gas production rate N to the capacity L of the lithium-ion batteries is 0.01479-0.02285mmol/Ah (millimole per ampere-hour). According to Pv=NRT, the ratio of the gas storage space v to the capacity L is obtained, v/L=NRT/PL L; T is 40°C, R is 8.314, the gas pressure P is 0.35 Mpa, N/L is 0.01479-0.02285mmol/Ah (millimole per ampere-hour), and therefore, 0.11cm³/Ah≤v/L≤0.17cm³/Ah, namely 0.11L≤v≤0.17L, and the unit of v is cubic centimeter (cm³).

Based on the Basic Group 1, the Basic Group 3 is established and is different from the Basic Group 1 in that the capacity of the lithium-ion batteries is adjusted to be 200 Ah by reducing the number of the positive and negative electrode plates, other conditions are the same, and finally after 3,000 cycles, the ratio of the gas production rate N to the capacity L of the lithium-ion batteries is 0.01882-0.02689mmol/Ah (millimole per ampere-hour); according to Pv=NRT, the ratio of the gas storage space v to the capacity L is obtained, v/L=NRT/PL L; T is 40°C, R is 8.314, the gas pressure P is 0.35 Mpa, N/L is 0.01882-0.02689mmol/Ah (millimole per ampere-hour), and therefore, 0.14cm³/Ah≤v/L≤0.2cm³, namely 0.14L≤v≤0.2L, and the unit of v is cubic centimeter (cm³).

Based on the Basic Group 1, the Basic Group 4 is established and is different from the Basic Group 1 in that the capacity of the lithium-ion batteries is adjusted to be 400 Ah by reducing the number of the positive and negative electrode plates, other conditions are the same, and finally after 3,000 cycles, the ratio of the gas production rate N to the capacity L of the lithium-ion batteries is 0.03226-0.04571mmol/Ah (millimole per ampere-hour). According to Pv=NRT, the ratio of the gas storage space v to the capacity L is obtained, v/L=NRT/PL L; T is 40°C, R is 8.314, the gas pressure P is 0.35 Mpa, N/L is 0.03226-0.04571mmol/Ah (millimole per ampere-hour), and therefore, 0.24cm³/Ah≤v/L≤0.34cm³/Ah, namely 0.24L≤v≤0.34L, and the unit of v is cubic centimeter (cm³).

Based on the Basic Group 1, the Basic Group 5 is established and is different from the Basic Group 1 in that the capacity of the lithium-ion batteries is adjusted to be 500 Ah by reducing the number of the positive and negative electrode plates, other conditions are the same, and finally after 3,000 cycles, the ratio of the gas production rate N to the capacity L of the lithium-ion batteries is 0.03899-0.05377mmol/Ah (millimole per ampere-hour). According to Pv=NRT, the ratio of the gas storage space v to the capacity L is obtained, v/L=NRT/PL L; T is 40°C, R is 8.314, the gas pressure P is 0.35 Mpa, N/L is 0.03899-0.05377mmol/Ah (millimole per ampere-hour), and therefore, 0.29cm³/Ah≤v/L≤0.4cm³/Ah, namely 0.29L≤v≤0.4L, and the unit of v is cubic centimeter (cm³).

Based on the Basic Group 1, the Basic Group 6 is established and is different from the Basic Group 1 in that the capacity of the lithium-ion batteries is adjusted to be 600 Ah by reducing the number of the positive and negative electrode plates, other conditions are the same, and finally after 3,000 cycles, the ratio of the gas production rate N to the capacity L of the lithium-ion batteries is 0.04436-0.06318mmol/Ah (millimole per ampere-hour). According to Pv=NRT, the ratio of the gas storage space v to the capacity L is obtained, v/L=NRT/PL L; T is 40°C, R is 8.314, the gas pressure P is 0.35 Mpa, N/L is 0.04436-0.06318mmol/Ah (millimole per ampere-hour), and therefore, 0.33cm³/Ah≤v/L≤0.47cm³/Ah, namely 0.33L≤v≤0.47L, and the unit of v is cubic centimeter (cm³).

Based on the Basic Group 1, the Basic Group 7 is established and is different from the Basic Group 1 in that the capacity of the lithium-ion batteries is adjusted to be 700 Ah by reducing the number of the positive and negative electrode plates, other conditions are the same, and finally after 3,000 cycles, the ratio of the gas production rate N to the capacity L of the lithium-ion batteries is 0.05109-0.07259mmol/Ah (millimole per ampere-hour). According to Pv=NRT, the ratio of the gas storage space v to the capacity L is obtained, v/L=NRT/PL L; T is 40°C, R is 8.314, the gas pressure P is 0.35 Mpa, N/L is 0.05109-0.07259mmol/Ah (millimole per ampere-hour), and therefore, 0.38cm³/Ah≤v/L≤0.54cm³/Ah, namely 0.38L≤v≤0.54L, and the unit of v is cubic centimeter (cm³).

Based on the Basic Group 1, the Basic Group 8 is established and is different from the Basic Group 1 in that the capacity of the lithium-ion batteries is adjusted to be 800 Ah by reducing the number of the positive and negative electrode plates, other conditions are the same, and finally after 3,000 cycles, the ratio of the gas production rate N to the capacity L of the lithium-ion batteries is 0.05915-0.08738mmol/Ah (millimole per ampere-hour). According to Pv=NRT, the ratio of the gas storage space v to the capacity L is obtained, v/L=NRT/PL L; T is 40°C, R is 8.314, the gas pressure P is 0.35 Mpa, N/L is 0.05915-0.08738mmol/Ah (millimole per ampere-hour), and therefore, 0.44cm³/Ah≤v/L≤0.65cm³/Ah, namely 0.44L≤v≤0.65L, and the unit of v is cubic centimeter (cm³).

Based on the Basic Group 1, the Basic Group 9 is established and is different from the Basic Group 1 in that the capacity of the lithium-ion batteries is adjusted to be 900 Ah by reducing the number of the positive and negative electrode plates, other conditions are the same, and finally after 3,000 cycles, the ratio of the gas production rate N to the capacity L of the lithium-ion batteries is 0.06856-0.09545mmol/Ah (millimole per ampere-hour). According to Pv=NRT, the ratio of the gas storage space v to the capacity L is obtained, v/L=NRT/PL L; T is 40°C, R is 8.314, the gas pressure P is 0.35 Mpa, N/L is 0.06856-0.09545mmol/Ah (millimole per ampere-hour), and therefore, 0.51cm³/Ah≤v/L≤0.71cm³/Ah, namely 0.51L≤v≤0.71L, and the unit of v is cubic centimeter (cm³).

Based on the Basic Group 1, the Basic Group 10 is established and is different from the Basic Group 1 in that the capacity of the lithium-ion batteries is adjusted to be 1,000 Ah by reducing the number of the positive and negative electrode plates, other conditions are the same, and finally after 3,000 cycles, the ratio of the gas production rate N to the capacity L of the lithium-ion batteries is 0.07932-0.10486mmol/Ah (millimole per ampere-hour). According to Pv=NRT, the ratio of the gas storage space v to the capacity L is obtained, v/L=NRT/PL L; T is 40°C, R is 8.314, the gas pressure P is 0.35 Mpa, N/L is 0.07932-0.10486mmol/Ah (millimole per ampere-hour), and therefore, 0.59cm³/Ah≤v/L≤0.78cm³/Ah, namely 0.59L≤v≤0.78L, and the unit of v is cubic centimeter (cm³).

Based on the Basic Group 1, the Basic Group 11 is established and is different from the Basic Group 1 in that the capacity of the lithium-ion batteries is adjusted to be 1,100 Ah by reducing the number of the positive and negative electrode plates, other conditions are the same, and finally after 3,000 cycles, the ratio of the gas production rate N to the capacity L of the lithium-ion batteries is 0.09141-0.11696mmol/Ah (millimole per ampere-hour). According to Pv=NRT, the ratio of the gas storage space v to the capacity L is obtained, v/L=NRT/PL L; T is 40°C, R is 8.314, the gas pressure P is 0.35 Mpa, N/L is 0.09141-0.11696mmol/Ah (millimole per ampere-hour), and therefore, 0.68cm³/Ah≤v/L≤0.87cm³/Ah, namely 0.68L≤v≤0.87L, and the unit of v is cubic centimeter (cm³).

Based on the Basic Group 1, the Basic Group 12 is established and is different from the Basic Group 1 in that the capacity of the lithium-ion batteries is adjusted to be 1,200 Ah by reducing the number of the positive and negative electrode plates, other conditions are the same, and finally after 3,000 cycles, the ratio of the gas production rate N to the capacity L of the lithium-ion batteries is 0.1062-0.13174mmol/Ah (millimole per ampere-hour). According to Pv=NRT, the ratio of the gas storage space v to the capacity L is obtained, v/L=NRT/PL L; T is 40°C, R is 8.314, the gas pressure P is 0.35 Mpa, N/L is 0.1062-0.13174mmol/Ah (millimole per ampere-hour), and therefore, 0.79cm³/Ah≤v/L≤0.98cm³/Ah, namely 0.79L≤v≤0.98L, and the unit of v is cubic centimeter (cm³).

In combination with the above adjusted groups and the basic groups, it is further analyzed and found that the ratio of the gas production rate to the capacity of the lithium-ion batteries increases along with the increase of the capacity; in order to provide design guidance for the lithium-ion batteries with different capacities in a theoretical gas storage space, and to improve safety, different design standards are provided for the lithium-ion batteries with different capacities L; for the lithium-ion batteries with the capacity of 200 Ah or below, the problem of the theoretical gas storage space can be ignored, it is because that during the cell assembling process, the tabs are to be welded to the terminal posts, the widths of the tabs are less than that of the electrode plate, and therefore there is a certain space around the tabs due to cell assembling, and the inevitable space is generally about 35 cm³; however, the maximum gas production rate in the Basic Group 2 is 17 cm³, the maximum gas production rate in the Basic Group 3 is 40 cm³, and therefore, the assembling space around the tabs of the lithium-ion batteries with the capacity of 200Ah or below can be basically sufficient for accumulation of produced gas; and in the present application, it is more focused on the lithium-ion batteries with the capacity of 200 Ah or above, and the theoretical gas storage space of the lithium ion batteries with the capacity of 200 Ah or above is more significant.

### For cells of 200 Ah and above:

In order to improve the safety and to improve the accommodating capacity in high-temperature abnormalities, it is needed to relieve the standard for gas storage space; specifically, for the lithium-ion batteries with capacity of 200Ah≤L≤300Ah, the actual gas storage space is not be less than the lower limit (0.24 cm³/Ah) of the ratio of gas storage volume v to capacity L for the lithium-ion batteries in the Basic Group 4, specifically, the lower limit (0.24 cm³/Ah) of the ratio of gas storage volume v to capacity L of the lithium-ion batteries in the Basic Group 4 is used for calculating the theoretical gas storage space.

In order to further reduce the issues caused by gas production, the actual gas storage space is be further optimized to be not less than the upper limit (0.34 cm³/Ah) of the ratio of gas storage space v to capacity L of the lithium-ion batteries in the Basic Group 4, and the upper limit (0.34 cm³/Ah) of the ratio of gas storage space v to capacity L of the lithium-ion batteries in the Basic Group 4 is correspondingly used for calculating the theoretical gas storage space.

In order to balance the energy density of the lithium-ion batteries, based on calculating the theoretical gas storage space by the lower limit (0.24 cm³/Ah) of the ratio of gas storage space v to capacity L of the lithium-ion batteries in the Basic Group 4, the actual gas storage space is further optimized to be not greater the upper limit (0.34 cm³/Ah) of the ratio of gas storage space v to capacity L of the lithium-ion batteries in the Basic Group 4, and the upper limit (0.34 cm³/Ah) of the ratio of gas storage space v to capacity L of the lithium-ion batteries in the Basic Group 4 is correspondingly used for calculating the theoretical maximum gas storage space.

Similarly, for the lithium-ion batteries with capacity of 300Ah<L≤400Ah:
The actual gas storage volume is not be less than the lower limit (0.29 cm³/Ah) of the ratio of gas storage volume v to capacity L of the lithium-ion batteries in Basic Group 5; specifically, the lower limit (0.29 cm³/Ah) of the ratio of gas storage volume v to capacity L of the lithium-ion batteries in the Basic Group 5 is used for calculating the theoretical gas storage volume;
it is further optimized to be not less the upper limit (0.4 cm³/Ah) of the ratio of gas storage space v to capacity L of the lithium-ion batteries in the Basic Group 5, and the upper limit (0.4 cm³/Ah) of the ratio of gas storage space v to capacity L of the lithium-ion batteries in the Basic Group 5 is correspondingly used for calculating the theoretical maximum gas storage space;
In order to balance the energy density of the lithium-ion batteries, based on calculating the theoretical gas storage space by the lower limit (0.29 cm³/Ah) of the ratio of gas storage space v to capacity L of the lithium-ion batteries in the Basic Group 5, the actual gas storage space is further optimized to be not greater the upper limit (0.4 cm³/Ah) of the ratio of gas storage space v to capacity L of the lithium-ion batteries in the Basic Group 5, and the upper limit (0.4 cm³/Ah) of the ratio of gas storage space v to capacity L of the lithium-ion batteries in the Basic Group 5 is correspondingly used for calculating the theoretical maximum gas storage space.

Similar designs are performed for other capacity ranges.

Specifically:
1) When the capacity L of the lithium-ion batteries meets L≥200Ah, preferably 200Ah≤L≤300Ah, the corresponding theoretical gas storage volume is V0=0.24cm³/Ah·L, with the unit of cm³; and the actual gas storage volume v is greater than or equal to the theoretical gas storage volume of V0=0.24cm³/Ah·L, for example, if the capacity L of the lithium-ion battery is 200 Ah, the theoretical gas storage volume is 0.24cm³/Ah·200Ah=48cm³. Therefore, for the lithium-ion battery with the capacity of L≥200Ah, preferably 200Ah≤L≤300Ah, the actual gas storage volume is shown as v≥48cm³.

In order to further reduce the problems caused by gas production, the corresponding theoretical gas storage volume is further optimized to be V0=0.34cm³/Ah·L, with the unit of cm³; and the actual gas storage volume v is greater than or equal to the theoretical gas storage volume of V0=0.34cm³/Ah·L, for example, if the capacity L of the lithium-ion battery is 200 Ah, the theoretical gas storage volume is 0.34cm³/Ah·200Ah=68cm³.

In order to balance the energy density of the lithium-ion batteries, the theoretical maximum gas storage volume is shown as V0max=0.34cm³/Ah·L, with the unit of cm³. Therefore, the actual gas storage volume v is greater than or equal to the theoretical gas storage volume of V0=0.24cm³/Ah·L, meanwhile, the actual gas storage volume v is less than or equal to the theoretical maximum gas storage volume of V0max=0.34cm³/Ah·L; and if the capacity L of the lithium-ion battery is 200 Ah, the theoretical maximum gas storage volume at this time is 68cm³.

2) When the capacity L of the lithium-ion batteries meets 300Ah<L≤400Ah, the corresponding theoretical gas storage volume is V0=0.29cm³/Ah·L, with the unit of cm³; the actual gas storage volume v is greater than or equal to the theoretical gas storage volume of V0=0.29cm³/Ah·L. Because L>300Ah, the theoretical gas storage volume is V0>0.29cm³/Ah·300Ah=87cm³. That is, when the capacity L of the lithium-ion batteries meet 300Ah<L≤400Ah, the actual gas storage volume is shown as v>87cm³.

In order to further reduce the problems caused by gas production, the corresponding theoretical gas storage volume is further optimized to be V0=0.4cm³/Ah·L, with the unit of cm³; and the actual gas storage volume v is greater than or equal to the theoretical gas storage volume of V0=0.4cm³/Ah·L.

In order to balance the energy density of the lithium-ion batteries, the theoretical maximum gas storage volume is shown as V0max=0.4cm³/Ah·L, with the unit of cm³. Therefore, the actual gas storage volume v is greater than or equal to the theoretical gas storage volume of V0=0.29cm³/Ah·L, meanwhile, the actual gas storage volume v is less than or equal to the theoretical maximum gas storage volume of V0max=0.4cm³/Ah·L.

3) When the capacity L of the lithium-ion batteries meet 400Ah<L≤500Ah, the corresponding theoretical gas storage volume is shown as V0=0.33cm³/Ah·L, with the unit of cm³, and the actual gas storage volume v is greater than or equal to the theoretical gas storage volume V0=0.33cm³/Ah·L; in order to further reduce problems caused by gas production, the corresponding theoretical gas storage volume is further optimized as V0=0.47cm³/Ah·L, with the unit of cm³, and the actual gas storage volume v is greater than or equal to the theoretical gas storage volume of V0=0.47cm³/Ah·L.

In order to balance the energy density of the lithium-ion batteries, the theoretical maximum gas storage volume is shown as V0max=0.47cm³/Ah·L, with the unit of cm³. Therefore, the actual gas storage volume v is greater than or equal to the theoretical gas storage volume of V0=0.33cm³/Ah·L, meanwhile, the actual gas storage volume v is less than or equal to the theoretical maximum gas storage volume of V0max=0.47cm³/Ah·L.

It is to be understood that in combination with 2) and 3), when the capacity L of the lithium-ion batteries meets 300Ah<L≤500Ah, it also meets the actual gas storage volume of v>87cm³.

4) When the capacity L of the lithium-ion batteries meets 500Ah<L≤600Ah, the corresponding theoretical gas storage volume is V0=0.38cm³/Ah·L, with the unit of cm³; the actual gas storage volume v is greater than or equal to the theoretical gas storage volume of V0=0.38cm³/Ah·L. Because L>500Ah, the theoretical gas storage volume is V0>0.38cm³/Ah·500Ah=190cm³. That is, when the capacity L of the lithium-ion batteries meet 500Ah<L≤600Ah, the actual gas storage volume is shown as v>190cm³.

In order to further reduce the problems caused by gas production, the corresponding theoretical gas storage volume is further optimized to be V0=0.54cm³/Ah·L, with the unit of cm³; and the actual gas storage volume v is greater than or equal to the theoretical gas storage volume of V0=0.54cm³/Ah·L.

In order to balance the energy density of the lithium-ion batteries, the theoretical maximum gas storage volume is shown as V0max=0.54cm³/Ah·L, with the unit of cm³. Therefore, the actual gas storage volume v is greater than or equal to the theoretical gas storage volume of V0=0.38cm³/Ah·L, meanwhile, the actual gas storage volume v is less than or equal to the theoretical maximum gas storage volume of V0max=0.54cm³/Ah·L.

5) When the capacity L of the lithium-ion batteries meet 600Ah<L≤700Ah, the corresponding theoretical gas storage volume is shown as V0=0.44cm³/Ah·L, with the unit of cm³, and the actual gas storage volume v is greater than or equal to the theoretical gas storage volume V0=0.44cm³/Ah·L; in order to further reduce problems caused by gas production, the corresponding theoretical gas storage volume is further optimized as V0=0.65cm³/Ah·L, with the unit of cm³, and the actual gas storage volume v is greater than or equal to the theoretical gas storage volume of V0=0.65cm³/Ah·L.

In order to balance the energy density of the lithium-ion batteries, the theoretical maximum gas storage volume is shown as V0max=0.65cm³/Ah·L, with the unit of cm³. Therefore, the actual gas storage volume v is greater than or equal to the theoretical gas storage volume of V0=0.44cm³/Ah·L, meanwhile, the actual gas storage volume v is less than or equal to the theoretical maximum gas storage volume of V0max=0.65cm³/Ah·L.

It is to be understood that in combination with 4) and 5), when the capacity L of the lithium-ion batteries meets 500Ah<L≤700Ah, it also meets the actual gas storage volume of v>190cm³.

6) When the capacity L of the lithium-ion batteries meet 700Ah<L≤800Ah, the corresponding theoretical gas storage volume is shown as V0=0.51cm³/Ah·L, with the unit of cm³, and the actual gas storage volume v is greater than or equal to the theoretical gas storage volume V0=0.51cm³/Ah·L; in order to further reduce problems caused by gas production, the corresponding theoretical gas storage volume is further optimized as V0=0.71cm³/Ah·L, with the unit of cm³, and the actual gas storage volume v is greater than or equal to the theoretical gas storage volume of V0=0.71cm³/Ah·L.

In order to balance the energy density of the lithium-ion batteries, the theoretical maximum gas storage volume is shown as V0max=0.71cm³/Ah·L, with the unit of cm³. Therefore, the actual gas storage volume v is greater than or equal to the theoretical gas storage volume of V0=0.51cm³/Ah·L, meanwhile, the actual gas storage volume v is less than or equal to the theoretical maximum gas storage volume of V0max=0.71cm³/Ah·L.

7) When the capacity L of the lithium-ion batteries meet 800Ah<L≤900Ah, the corresponding theoretical gas storage volume is shown as V0=0.59cm³/Ah·L, with the unit of cm³, and the actual gas storage volume v is greater than or equal to the theoretical gas storage volume V0=0.59cm³/Ah·L; in order to further reduce problems caused by gas production, the corresponding theoretical gas storage volume is further optimized as V0=0.78cm³/Ah·L, with the unit of cm³, and the actual gas storage volume v is greater than or equal to the theoretical gas storage volume of V0=0.78cm³/Ah·L.

In order to balance the energy density of the lithium-ion batteries, the theoretical maximum gas storage volume is shown as V0max=0.78cm³/Ah·L, with the unit of cm³. Therefore, the actual gas storage volume v is greater than or equal to the theoretical gas storage volume of V0=0.59cm³/Ah·L, meanwhile, the actual gas storage volume v is less than or equal to the theoretical maximum gas storage volume of V0max=0.78cm³/Ah·L.

8) When the capacity L of the lithium-ion batteries meet 900Ah<L≤1000Ah, the corresponding theoretical gas storage volume is shown as V0=0.68cm³/Ah·L, with the unit of cm³, and the actual gas storage volume v is greater than or equal to the theoretical gas storage volume V0=0.68cm³/Ah·L; in order to further reduce problems caused by gas production, the corresponding theoretical gas storage volume is further optimized as V0=0.87cm³/Ah·L, with the unit of cm³, and the actual gas storage volume v is greater than or equal to the theoretical gas storage volume of V0=0.87cm³/Ah·L.

In order to balance the energy density of the lithium-ion batteries, the theoretical maximum gas storage volume is shown as V0max=0.87cm³/Ah·L, with the unit of cm³. Therefore, the actual gas storage volume v is greater than or equal to the theoretical gas storage volume of V0=0.68cm³/Ah·L, meanwhile, the actual gas storage volume v is less than or equal to the theoretical maximum gas storage volume of V0max=0.87cm³/Ah·L.

9) When the capacity L of the lithium-ion batteries meet 1000Ah<L≤1100Ah, the corresponding theoretical gas storage volume is shown as V0=0.79cm³/Ah·L, with the unit of cm³, and the actual gas storage volume v is greater than or equal to the theoretical gas storage volume V0=0.79cm³/Ah·L; in order to further reduce problems caused by gas production, the corresponding theoretical gas storage volume is further optimized as V0=0.98cm³/Ah·L, with the unit of cm³, and the actual gas storage volume v is greater than or equal to the theoretical gas storage volume of V0=0.98cm³/Ah·L.

In order to balance the energy density of the lithium-ion batteries, the theoretical maximum gas storage volume is shown as V0max=0.98cm³/Ah·L, with the unit of cm³. Therefore, the actual gas storage volume v is greater than or equal to the theoretical gas storage volume of V0=0.79cm³/Ah·L, meanwhile, the actual gas storage volume v is less than or equal to the theoretical maximum gas storage volume of V0max=0.98cm³/Ah·L.

When actually designing the lithium-ion battery, based on the preset capacity L of the lithium-ion battery, the theoretical gas storage volume V0 and the theoretical maximum gas storage volume V0max can be calculated; the actual reserved gas storage volume v in the battery case is greater than or equal to the theoretical gas storage volume V0; to balance the energy density, the actual gas storage volume v is preferably less than or equal to the theoretical maximum gas storage volume V0max;
for the actual gas storage space, other assemblies between the case and the cells, such as supporting structures, are not included, as these components also occupy the volume.

The above basic groups and adjusted groups are exemplary and intended only to explain the present application, and should not be understood as limiting the present application.

Embodiment 1, it is different from the Basic Group 1 in that the gas storage space of the lithium-ion battery is equal to the theoretical storage space of 72 cm³, and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles.

Embodiment 2, it is different from the Basic Group 1 in that the gas storage space of the lithium-ion battery is equal to the theoretical storage space of 48 cm³, and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles.

Embodiment 3, it is different from the Basic Group 1 in that the gas storage space of the lithium-ion battery is equal to the theoretical storage space of 869 cm³, and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles.

Embodiment 4, it is different from the Basic Group 1 in that the gas storage space of the lithium-ion battery is equal to the theoretical storage space of 116 cm³, and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles.

Embodiment 5, it is different from the Basic Group 1 in that the gas storage space of the lithium-ion battery is equal to the theoretical storage space of 165 cm³, and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles.

Embodiment 6, it is different from the Basic Group 1 in that the gas storage space of the lithium-ion battery is equal to the theoretical storage space of 228 cm³, and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles.

Embodiment 7, it is different from the Basic Group 1 in that the gas storage space of the lithium-ion battery is equal to the theoretical storage space of 308 cm³, and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles.

Embodiment 8, it is different from the Basic Group 1 in that the gas storage space of the lithium-ion battery is equal to the theoretical storage space of 408 cm³, and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles.

Embodiment 9, it is different from the Basic Group 1 in that the gas storage space of the lithium-ion battery is equal to the theoretical storage space of 531 cm³, and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles.

Embodiment 10, it is different from the Basic Group 1 in that the gas storage space of the lithium-ion battery is equal to the theoretical storage space of 680 cm³, and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles.

Comparative Embodiment 1, it is different from the Basic Group 1 in that the gas storage space of the lithium-ion battery is 54 cm³ (the corresponding relationship between the battery gas storage volume v and capacity L of the lithium-ion is 0.18 cm³/Ah, which is less than the lower limit of 0.19 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 2, it is different from the Basic Group 1 in that the gas storage space of the lithium-ion battery is 26 cm³ (the corresponding relationship between the battery gas storage volume v and capacity L of the lithium-ion is 0.13 cm³/Ah, which is less than the lower limit of 0.14 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 3, it is different from the Basic Group 1 in that the gas storage space of the lithium-ion battery is 737 cm³ (the corresponding relationship between the battery gas storage volume v and capacity L of the lithium-ion is 0.67 cm³/Ah, which is less than the lower limit of 0.68 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 4, it is different from the Basic Group 1 in that the gas storage space of the lithium-ion battery is 92 cm³ (the corresponding relationship between the battery gas storage volume v and capacity L of the lithium-ion is 0.23 cm³/Ah, which is less than the lower limit of 0.24 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 5, it is different from the Basic Group 1 in that the gas storage space of the lithium-ion battery is 140 cm³ (the corresponding relationship between the battery gas storage volume v and capacity L of the lithium-ion is 0.28 cm³/Ah, which is less than the lower limit of 0.29 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 6, it is different from the Basic Group 1 in that the gas storage space of the lithium-ion battery is 192 cm³ (the corresponding relationship between the battery gas storage volume v and capacity L of the lithium-ion is 0.32 cm³/Ah, which is less than the lower limit of 0.33 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 7, it is different from the Basic Group 1 in that the gas storage space of the lithium-ion battery is 259 cm³ (the corresponding relationship between the battery gas storage volume v and capacity L of the lithium-ion is 0.37 cm³/Ah, which is less than the lower limit of 0.38 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped); in addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 8, it is different from the Basic Group 1 in that the gas storage space of the lithium-ion battery is 344 cm³ (the corresponding relationship between the battery gas storage volume v and capacity L of the lithium-ion is 0.43 cm³/Ah, which is less than the lower limit of 0.44 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 9, it is different from the Basic Group 1 in that the gas storage space of the lithium-ion battery is 450 cm³ (the corresponding relationship between the battery gas storage volume v and capacity L of the lithium-ion is 0.50 cm³/Ah, which is less than the lower limit of 0.51 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 10, it is different from the Basic Group 1 in that the gas storage space of the lithium-ion battery is 580 cm³ (the corresponding relationship between the battery gas storage volume v and capacity L of the lithium-ion is 0.58 cm³/Ah, which is less than the lower limit of 0.59 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 11, it is different from the Basic Group 1 in that the gas storage space of the lithium-ion battery is 66 cm³ (the corresponding relationship between the battery gas storage volume v and capacity L of the lithium-ion is 0.22 cm³/Ahv, which is less than the lower limit of 0.26 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 12, it is different from the Basic Group 1 in that the gas storage space of the lithium-ion battery is 36 cm³ (the corresponding relationship between the battery gas storage volume v and capacity L of the lithium-ion is 0.18 cm³/Ah, which is less than the lower limit of 0.2 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 13, it is different from the Basic Group 1 in that the gas storage space of the lithium-ion battery is 836 cm³ (the corresponding relationship between the battery gas storage volume v and capacity L of the lithium-ion is 0.76 cm³/Ah, which is less than the lower limit of 0.87 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 14, it is different from the Basic Group 1 in that the gas storage space of the lithium-ion battery is 114 cm³ (the corresponding relationship between the battery gas storage volume v and capacity L of the lithium-ion is 0.28 cm³/Ah, which is less than the lower limit of 0.34 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 15, it is different from the Basic Group 1 in that the gas storage space of the lithium-ion battery is 155 cm³ (the corresponding relationship between the battery gas storage volume v and capacity L of the lithium-ion is 0.31 cm³/Ah, which is less than the lower limit of 0.4 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 16, it is different from the Basic Group 1 in that the gas storage space of the lithium-ion battery is 216 cm³ (the corresponding relationship between the battery gas storage volume v and capacity L of the lithium-ion is 0.36 cm³/Ah, which is less than the lower limit of 0.47 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 17, it is different from the Basic Group 1 in that the gas storage space of the lithium-ion battery is 294 cm³ (the corresponding relationship between the battery gas storage volume v and capacity L of the lithium-ion is 0.42 cm³/Ah, which is less than the lower limit of 0.54 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 18, it is different from the Basic Group 1 in that the gas storage space of the lithium-ion battery is 392 cm³ (the corresponding relationship between the battery gas storage volume v and capacity L of the lithium-ion is 0.49 cm³/Ah, which is less than the lower limit of 0.65 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 19, it is different from the Basic Group 1 in that the gas storage space of the lithium-ion battery is 513 cm³ (the corresponding relationship between the battery gas storage volume v and capacity L of the lithium-ion is 0.57 cm³/Ah, which is less than the lower limit of 0.71 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 20, it is different from the Basic Group 1 in that the gas storage space of the lithium-ion battery is 660 cm³ (the corresponding relationship between the battery gas storage volume v and capacity L of the lithium-ion is 0.66 cm³/Ah, which is less than the lower limit of 0.78 cm³/Ah in the Basic Group 1), and there is no gas pressure sensor in the case. In addition, in this embodiment, after 50 lithium-ion batteries in the first part are cycled for 3,000 cycles at 40°C, and 50 lithium-ion batteries in the second part are cycled at 40°C for 1,500 circles, each subsequent charging process is as follows: before reaching the cut-off voltage, during charging at 40°C, a 3-minute 90°C circle is added, and other conditions are the same as for the 50 lithium-ion batteries in the first part, and cycling continues until reaching 3,000 cycles (if any explosion-proof valve of the lithium-ion battery is forced open, charging and discharging are stopped).

Comparative Embodiment 21, it is different from the Basic Group 1 in that the positive electrode active material is lithium nickel cobalt manganese oxide with a nickel content accounting for 0.8 of the atomic ratio of nickel, cobalt, and manganese; the charge and discharge cut-off voltages, as well as the positive electrode film thickness and compacted density are correspondingly adjusted, other conditions are similar to those of the Basic Group 1.

After 3,000 cycles of the lithium-ion batteries in the Embodiment 1 to the embodiment 10, the explosion-proof values are not forced open;
in the Comparative Embodiment 1 to the Comparative Embodiment 10, none of the lithium-ion batteries in the first part of each Comparative Embodiment are forced opened, while 15-25 lithium-ion batteries in the second part of each Comparative Embodiment are forced open;
in the Comparative Embodiment 11 to the Comparative Embodiment 20, none of the lithium-ion batteries in the first part of each Comparative Embodiment are forced opened, while 1-10 lithium-ion batteries in the second part of each Comparative Embodiment are forced open;
in the Comparative Embodiment 21, 70 lithium-ion batteries are forced open;
By comparing the Comparative Embodiment 21 with the Embodiment 1, it is found that the choice of the material system, especially the choice of positive electrode material, greatly affects whether the explosion-proof valve is forced open; and in view of gas production, lithium phosphate-containing materials are preferred.

By comparing the Embodiment 1 to the Embodiment 10 with the Comparative Embodiment 1 to the Comparative Embodiment 10 as well as the Comparative Embodiment 11 to the Comparative Embodiment 20, it is found that when the actual gas storage space is not less than the theoretical gas storage space, not only will the normally cycling lithium-ion battery not be forced open, but it will also have the ability to resist high-temperature abnormalities, thereby making the lithium-ion battery safer; the Comparative Embodiment 1 to the Comparative Embodiment 10 as well as the Comparative Embodiment 11 to the Comparative Embodiment 20 indicate that although the actual gas storage space is smaller than the theoretical gas storage space, the closer it is to the theoretical gas storage space, the greater its ability to resist high-temperature abnormalities.

In the present application, the gas production is reduced as much as possible from a plurality of factors including the positive electrode active material and the negative electrode active material, the positive electrode plate and the negative electrode plate, the separator as well as the electrolyte solution, so that unnecessary internal space can be reduced, more active materials can be arranged, thereby improving the capacity of the lithium-ion battery. Moreover, the gas storage space is optimized on the basis of the measures of reducing gas production, so that the explosion-proof valve of the lithium-ion battery will not be forced open under normal use conditions, the lithium-ion battery has the capability of resisting high-temperature abnormalities, and the risk of scrapping of the lithium-ion battery due to that the explosion-proof valve is forced open can be reduced.

It is be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A lithium-ion battery, comprising a case, a cell, and an electrolyte solution, wherein the cell and the electrolyte solution are arranged in the case; the cell comprises a positive electrode plate, a negative electrode plate, and a separator; the separator is arranged between the positive electrode plate and the negative electrode plate; the positive electrode plate comprises a positive electrode current collector and a positive electrode active material layer; the positive electrode active material layer is electrically connected to the positive electrode current collector; the negative electrode plate comprises a negative electrode current collector and a negative electrode active material layer; the negative electrode active material layer is electrically connected to the negative electrode current collector;
at least one surface of the negative electrode current collector is provided with the negative electrode active material layer, and a thickness of the active material layer on one surface of the negative electrode plate is 50-95 µm; the negative electrode active material layer comprises a negative electrode active material, and the negative electrode active material comprises graphite; Dv50 of the graphite is 10-30 µm, and a graphitization degree of the graphite is greater than or equal to 90%;
at least one surface of the positive electrode current collector is provided with the positive electrode active material layer, and the thickness of the active material layer on one surface of the positive electrode plate is 60-105 µm; the positive electrode active material layer comprises a positive electrode active material, and the positive electrode active material comprises lithium-containing phosphate and a carbon layer located on a surface of the lithium-containing phosphate; and
a capacity L of the lithium-ion battery is ≥ 200Ah, and an actual gas storage space v of the lithium-ion battery is ≥ 48cm³.

2. The lithium-ion battery according to claim 1, wherein the capacity L of the lithium-ion battery is 200Ah≤ L≤300Ah, and the theoretical gas storage space of the lithium-ion battery is V0, and V0=0.24cm³/Ah·L; or,
the capacity L of the lithium-ion battery is 300Ah<L≤400Ah, and the theoretical gas storage space of the lithium-ion battery is V0, and V0=0.29cm³/Ah·L; or,
the capacity L of the lithium-ion battery is 400Ah<L≤500Ah, and the theoretical gas storage space of the lithium-ion battery is V0, and V0=0.33cm³/Ah·L; or,
the capacity L of the lithium-ion battery is 500Ah<L≤600Ah, and the theoretical gas storage space of the lithium-ion battery is V0, and V0=0.38cm³/Ah·L; or,
the capacity L of the lithium-ion battery is 600Ah<L≤700Ah, and the theoretical gas storage space of the lithium-ion battery is V0, and V0=0.44cm³/Ah·L; or,
the capacity L of the lithium-ion battery is 700Ah<L≤800Ah, and the theoretical gas storage space of the lithium-ion battery is V0, and V0=0.51cm³/Ah·L; or,
the capacity L of the lithium-ion battery is 800Ah<L≤900Ah, and the theoretical gas storage space of the lithium-ion battery is V0, and V0=0.59cm³/Ah·L; or,
the capacity L of the lithium-ion battery is 900Ah<L≤1000Ah, and the theoretical gas storage space of the lithium-ion battery is V0, and V0=0.68cm³/Ah·L; or,
the capacity L of the lithium-ion battery is 1000Ah<L≤1100Ah, and the theoretical gas storage space of the lithium-ion battery is V0, and V0=0.79cm³/Ah·L; and
the actual gas storage space v of the lithium-ion battery is greater than or equal to the theoretical gas storage space V0.

3. The lithium-ion battery according to claim 1, wherein the capacity L of the lithium-ion battery is 200Ah≤ L≤300Ah, and the theoretical gas storage space of the lithium-ion battery is V0, and V0=0.34cm³/Ah·L; or,
the capacity L of the lithium-ion battery is 300Ah<L≤400Ah, and the theoretical gas storage space of the lithium-ion battery is V0, and V0=0.4cm³/Ah·L; or,
the capacity L of the lithium-ion battery is 400Ah<L≤500Ah, and the theoretical gas storage space of the lithium-ion battery is V0, and V0=0.47cm³/Ah·L; or,
the capacity L of the lithium-ion battery is 500Ah<L≤600Ah, and the theoretical gas storage space of the lithium-ion battery is V0, and V0=0.54cm³/Ah·L; or,
the capacity L of the lithium-ion battery is 600Ah<L≤700Ah, and the theoretical gas storage space of the lithium-ion battery is V0, and V0=0.65cm³/Ah·L; or,
the capacity L of the lithium-ion battery is 700Ah<L≤800Ah, and the theoretical gas storage space of the lithium-ion battery is V0, and V0=0.71cm³/Ah·L; or,
the capacity L of the lithium-ion battery is 800Ah<L≤900Ah, and the theoretical gas storage space of the lithium-ion battery is V0, and V0=0.78cm³/Ah·L; or,
the capacity L of the lithium-ion battery is 900Ah<L≤1000Ah, and the theoretical gas storage space of the lithium-ion battery is V0, and V0=0.87cm³/Ah·L; or,
the capacity L of the lithium-ion battery is 1000Ah<L≤1100Ah, and the theoretical gas storage space of the lithium-ion battery is V0, and V0=0.98cm³/Ah·L; and
the actual gas storage space v of the lithium-ion battery is greater than or equal to the theoretical gas storage space V0.

4. The lithium-ion battery according to claim 2, wherein the capacity L of the lithium-ion battery is 200Ah≤ L≤300Ah, and the theoretical maximum gas storage space of the lithium-ion battery is V0max, and V0max=0.34cm³/Ah·L; or,
the capacity L of the lithium-ion battery is 300Ah<L≤400Ah, and the theoretical gas storage space of the lithium-ion battery is V0max, and V0max=0.4cm³/Ah·L; or,
the capacity L of the lithium-ion battery is 400Ah<L≤500Ah, and the theoretical gas storage space of the lithium-ion battery is V0max, and V0max=0.47cm³/Ah·L; or,
the capacity L of the lithium-ion battery is 500Ah<L≤600Ah, and the theoretical gas storage space of the lithium-ion battery is V0max, and V0max=0.54cm³/Ah·L; or,
the capacity L of the lithium-ion battery is 600Ah<L≤700Ah, and the theoretical gas storage space of the lithium-ion battery is V0max, and V0max=0.65cm³/Ah·L; or,
the capacity L of the lithium-ion battery is 700Ah<L≤800Ah, and the theoretical gas storage space of the lithium-ion battery is V0max, and V0max=0.71cm³/Ah·L; or,
the capacity L of the lithium-ion battery is 800Ah<L≤900Ah, and the theoretical gas storage space of the lithium-ion battery is V0max, and V0max=0.78cm³/Ah·L; or,
the capacity L of the lithium-ion battery is 900Ah<L≤1000Ah, and the theoretical gas storage space of the lithium-ion battery is V0max, and V0max=0.87cm³/Ah·L; or,
the capacity L of the lithium-ion battery is 1000Ah<L≤1100Ah, and the theoretical gas storage space of the lithium-ion battery is V0max, and V0max=0.98cm³/Ah·L; and
the actual gas storage space v of the lithium-ion battery is greater than or equal to the theoretical gas storage spaces V0max.

5. The lithium-ion battery according to any one of claims 1 to 4, wherein at least part of the surface of graphite is coated with a carbon layer, the Dv90 of the graphite is ≤40µm, the Dv10 of the graphite is ≥3µm, and the Dv99 of the graphite is ≤49µm; and/or,
an OI value of the graphite is 3-30; and/or,
the graphitization degree of the graphite is 90%-95%.

6. The lithium-ion battery according to claim 5, wherein the OI value of the graphite is 10-30.

7. The lithium-ion battery according to claim 5, wherein the graphitization degree of the graphite is 91%-95%; and/or,
the OI value of the graphite is 15-30.

8. The lithium-ion battery according to any one of claims 1 to 4, wherein a surface density of the active material layer on one surface of the negative electrode plate is 0.07mg/mm²-0.13mg/mm².

9. The lithium-ion battery according to any one of claims 1 to 4, wherein a compacted density of the active material layer on one surface of the negative electrode plate is 1.3g/cc-1.7g/cc.

10. The lithium-ion battery according to any one of claims 1 to 4, wherein a surface density of the active material layer on one surface of the positive electrode plate is 0.16mg/mm²-0.26mg/mm².

11. The lithium-ion battery according to any one of claims 1 to 4, wherein a compacted density of the active material layer on one surface of the positive electrode plate is 2.3g/cc-2.7g/cc.

12. The lithium-ion battery according to any one of claims 1 to 4, wherein the separator comprises a base film and a coating, the coating is adhered to a surface of the base film and partially located in the base film, and a porosity of the separator is 30%-50%.

13. The lithium-ion battery according to claim 5, wherein a thickness of the carbon layer on the surface of the graphite is 0.5-2 µm.

14. The lithium-ion battery according to any one of claims 1 to 4, wherein the negative electrode active material layer further comprises carbon nanotubes, and the carbon nanotubes comprise at least one of few-walled carbon nanotubes and single-walled carbon nanotubes.

15. The lithium-ion battery according to any one of claims 1 to 4, wherein the negative electrode active material layer further comprises silicon; and if the capacity L of the lithium-ion battery is 200Ah≤L≤500Ah, a mass content of silicon in the negative electrode active material layer is 1%-10%.

16. The lithium-ion battery according to claim 15, wherein in a thickness direction of the negative electrode active material layer, the silicon is distributed on a side of the negative electrode active material layer close to the negative electrode current collector.

17. The lithium-ion battery according to any one of claims 1 to 4, wherein the lithium-containing phosphate comprises lithium iron phosphate that is doped with a metal element, and the metal element is selected from at least one of titanium and vanadium.

18. The lithium-ion battery according to claim 17, wherein the doped metal element accounts for not greater than 0.4% of the mass of the positive electrode active material.

19. The lithium-ion battery according to claim 18, wherein the doped metal elements comprise titanium, and the titanium accounts for 0.2%-0.4% of the mass of the positive electrode active material.

20. The lithium-ion battery according to claim 18, wherein the doped metal elements comprise titanium and vanadium, the titanium accounts for 0.1%-0.2% of the mass of the positive electrode active material, and the vanadium accounts for 0.01%-0.05% of the mass of the positive electrode active material.

21. The lithium-ion battery according to any one of claims 1 to 4, wherein the positive electrode active material layer comprises carbon nanotubes, and the carbon nanotubes comprise at least one of few-walled carbon nanotubes and single-walled carbon nanotubes.

22. The lithium-ion battery according to any one of claims 1 to 4, wherein the electrolyte solution comprises a lithium salt and a solvent, a molar content by volume of the lithium salt is 0.8mol/L-1.5mol/L, and the lithium salt comprises lithium hexafluorophosphate.

23. The lithium-ion battery according to claim 22, wherein the lithium salt further comprises lithium bis(fluorosulfonyl)imide.

24. The lithium-ion battery according to claim 23, wherein the molar content by volume of lithium hexafluorophosphate is higher than that of lithium bis(fluorosulfonyl)imide.

25. The lithium-ion battery according to claim 24, wherein the capacity L of the lithium-ion battery is 200Ah≤L≤300Ah, and the lithium bis(fluorosulfonyl)imide accounts for 0.1%-9% of the mass of the electrolyte solution.

26. The lithium-ion battery according to claim 25, wherein the lithium bis(fluorosulfonyl)imide accounts for 0.1%-5% of the mass of the electrolyte solution.

27. The lithium-ion battery according to claim 24, wherein the capacity L of the lithium-ion battery is 300Ah<L≤500Ah, and lithium bis(fluorosulfonyl)imide accounts for 1%-9% of the mass of the electrolyte solution.

28. The lithium-ion battery according to claim 27, wherein the lithium bis(fluorosulfonyl)imide accounts for 1%-5% of the mass of the electrolyte solution.

29. The lithium-ion battery according to claim 23, wherein the solvent comprises EC, DMC, EMC, and DEC; the content of EC is 30%-40%, and a sum of the mass of DMC and the mass of EMC is greater than the mass of EC; and the content of EC is a quotient of the mass of EC/ (difference value between the mass of the electrolyte solution and the mass of the lithium salt).

30. The lithium-ion battery according to claim 29, wherein the total content of EMC and DMC is 50%-60%; and the total content of EMC and DMC is the quotient of the total mass of EMC and DMC/ (difference value between the mass of the electrolyte solution and the mass of the lithium salt).

31. The lithium-ion battery according to claim 30, wherein the content of DMC is 10%-15%; and the content of DMC is the quotient of the mass of the DMC/(difference value between the mass of the electrolyte solution and the mass of the lithium salt).

32. The lithium-ion battery according to claim 23, wherein the electrolyte solution further comprises carboxylic ester with the content not greater than 10%; and the content of the carboxylic ester is the quotient of the mass of the carboxylic ester/ (difference value between the mass of the electrolyte solution and the mass of the lithium salt).

33. The lithium-ion battery according to any one of claims 23 to 32, wherein the negative electrode plate is of a square structure, a width of the negative electrode plate is 100-150 mm, and the porosity of the separator is 30%-50%.

34. The lithium-ion battery according to any one of claims 23 to 32, wherein the negative electrode plate is of a square structure, a width of the negative electrode plate is 200-250 mm, and the porosity of the separator is 35%-50%.

35. The lithium-ion battery according to claim 33, wherein the length-width ratio of the cell is 6-8.

36. The lithium-ion battery according to claim 34, wherein the length-width ratio of the cell is 2.8-4.

37. The lithium-ion battery according to any one of claims 1 to 4, wherein the negative electrode plate further comprises negative electrode tabs which are electrically connected to the negative electrode current collector; the positive electrode plate further comprises positive electrode tabs which are electrically connected to the positive electrode current collector;
the case comprises a positive electrode terminal post, a negative electrode terminal post, and an explosion-proof valve; the positive electrode terminal post is electrically connected to the positive electrode tabs; the negative electrode terminal post is electrically connected to the negative electrode tab; the explosion-proof valve is arranged at a first end of the case; at least one of the positive electrode terminal post and the negative electrode terminal post is also arranged at the first end of the case; a gas pressure for opening the explosion-proof valve is 0.55-0.65 Mpa; and a ratio of an area of the explosion-proof valve to the capacity of the lithium-ion battery is 0.5mm²/Ah-1.5mm²/Ah.

38. The lithium-ion battery according to claim 37, wherein the positive electrode terminal post is arranged at the first end of the case; the positive electrode tabs are arranged on a short edge of the positive electrode current collector; a first upper exhaust channel is formed between upper ends of the positive electrode tabs and the case; and in an airflow direction of the first upper exhaust channel, a projection region of the explosion-proof valve is at least partially overlapped with the projection region of the first upper exhaust channel.

39. The lithium-ion battery according to claim 38, wherein in the airflow direction of the first upper exhaust channel, an overlap ratio of the projection region of the explosion-proof valve and the projection region of the first upper exhaust channel exceeds 80%; the overlap ratio of the projection region of the explosion-proof valve and the projection region of the first upper exhaust channel is a ratio of an area of the overlapping region of the projection region of the explosion-proof valve and the projection region of the first upper exhaust channel to an area of the projection region of the first upper exhaust channel.

40. The lithium-ion battery according to claim 38 or 39, wherein the positive electrode tabs are asymmetrically distributed on the short edge of the positive electrode current collector.

41. The lithium-ion battery according to claim 40, wherein in a width direction of the cell, a vertical distance from upper ends of the positive electrode tabs to an upper end of the positive electrode plate is a first distance, the vertical distance from lower ends of the positive electrode tabs to a lower end of the positive electrode plate is a second distance, and the first distance is greater than the second distance.

42. The lithium-ion battery according to claim 37, wherein the negative electrode terminal post is arranged at a first end of the case, the negative electrode tabs are arranged on the short edge of the negative electrode current collector, a second upper exhaust channel is formed between upper ends of the negative electrode tabs and the case; and in the airflow direction of the second upper exhaust channel, the projection region of the explosion-proof valve and the projection region of the second upper exhaust channel are at least partially overlapped.

43. The lithium-ion battery according to claim 42, wherein in the airflow direction of the second upper exhaust channel, the overlap ratio of the projection region of the explosion-proof valve and the projection region of the second upper exhaust channel exceeds 80%; and the overlap ratio of the projection region of the explosion-proof valve and the projection region of the second upper exhaust channel is the ratio of the area of the overlapping region of the projection region of the explosion-proof valve and the projection region of the second upper exhaust channel to the area of the projection region of the second upper exhaust channel.

44. The lithium-ion battery according to claim 42 or 43, wherein the ratio of widths of the negative electrode tabs to a width of the short edge of the negative electrode current collector is 0.5-0.8.

45. The lithium-ion battery according to claim 44, wherein the ratio of widths of the negative electrode tabs to the width of the short edge of the negative electrode current collector is 0.6-0.8.

46. The lithium-ion battery according to claim 42 or 43, wherein the negative electrode tabs are asymmetrically distributed on the short edge of the negative electrode current collector.

47. The lithium-ion battery according to claim 46, wherein in the width direction of the cell, a vertical distance from the upper ends of the negative electrode tabs to the upper end of the negative electrode plate is a third distance, the vertical distance from the lower ends of the negative electrode tabs to the lower end of the negative electrode plate is a fourth distance, and the third distance is greater than the fourth distance.

48. The lithium-ion battery according to any one of claims 1 to 4, wherein a difference value of Dv50 and Dv10 of graphite is ≤10µm, and the difference value of Dv90 and Dv50 of graphite is ≤15µm.

49. The lithium-ion battery according to any one of claims 1 to 4, wherein the positive electrode current collector is prepared from aluminum foil, a thickness of the active material layer on one surface of the positive electrode plate is ≤95µm, the thickness of the positive electrode current collector is D1, and D1 is 11µm-13.5µm.

50. The lithium-ion battery according to any one of claims 1 to 4, wherein the thickness of the active material layer on one surface of the positive electrode plate is >95µm, the thickness of the positive electrode current collector is D2, and D2 is 13.5-16 µm.

51. The lithium-ion battery according to any one of claims 1 to 4, wherein the negative electrode active material layer further comprises silicon; the thickness of the active material layer on one surface of the negative electrode plate is 50-70 µm, and a mass content of silicon in the negative electrode active material layer is 1%-10%.

52. The lithium-ion battery according to any one of claims 1 to 4, wherein the negative electrode active material layer further comprises silicon; the thickness of the active material layer on one surface of the negative electrode plate is 70-80 µm, and a mass content of silicon in the negative electrode active material layer is 1%-8%.

53. The lithium-ion battery according to any one of claims 1 to 4, wherein the negative electrode active material layer further comprises silicon; the thickness of the active material layer on one surface of the negative electrode plate is 80-95 µm, and a mass content of silicon in the negative electrode active material layer is 1%-5%.

54. The lithium-ion battery according to claim 32, wherein the capacity L of the lithium-ion battery is 200Ah≤L≤300Ah, the content of the carboxylic ester is 5%-10%, and lithium bis(fluorosulfonyl)imide accounts for 0.1%-5% of the mass of the electrolyte solution.

55. The lithium-ion battery according to claim 32, wherein the capacity L of the lithium-ion battery is 300Ah<L≤500Ah, the content of the carboxylic ester is 5%-10%, and lithium bis(fluorosulfonyl)imide accounts for 1%-5% of the mass of the electrolyte solution.

56. The lithium-ion battery according to claim 5, wherein the negative electrode active material comprises primary particles consisting of graphite and the carbon layer on the surface of the graphite, and the Dv50 of the primary particles is 10-20 µm.

57. The lithium-ion battery according to claim 56, wherein the negative electrode active material comprises secondary particles, the secondary particles comprise aggregates of the primary particles, and the Dv50 of the secondary particles is 10-30 µm.

58. The lithium-ion battery according to claim 57, wherein surfaces of the aggregates comprise a carbon layer.

59. A charging method, being used for charging the lithium-ion battery according to any one of claims 1 to 58, and comprising a first charging section and a second charging section, wherein a voltage in the first charging section is less than that in the second charging section, the voltage of the first charging section increases as the charging time increases, and the voltage of the second charging section is unchanged; the first charging section comprises the following charging processes:
charging the lithium-ion battery with a first current within a first time;
charging the lithium-ion battery with a second current within a second time;
charging the lithium-ion battery with a third current within a third time; and
charging the lithium-ion battery with a fourth current within a fourth time;
the first current is greater than the second current, the first time is greater than the second time, the third current is not greater than the first current, the third time is greater than the second time, the fourth current is less than the third current, and the fourth time is less than the third current.

60. The charging method according to claim 59, wherein the second current is equal to the fourth current.

61. A lithium-ion battery system, comprising a management module and the lithium-ion battery according to any one of claims 1 to 58, wherein the management module comprises a charging program for the lithium-ion battery, and the charging program implements the charging method according to claim 59 or 60.
